# EUROPÄISCHE PATENTSCHRIFT

(11) **EP 2 031 024 B1**
(45) Veröffentlichungstag und Bekanntmachung des Hinweises auf die Patenterteilung: **24.02.2010**
(21) Anmeldenummer: 08163389.3
(22) Anmeldetag: 01.09.2008
(51) Int. Cl.: C08L 101/10

(54) **Vernetzbare Massen auf der Basis von Organosiliciumverbindungen**
Crosslinkable materials based on organosilicon compounds
Masses réticulables à base de composés organosiliciques

(30) Priorität: 03.09.2007 DE 102007041856
(43) Veröffentlichungstag der Anmeldung: 04.03.2009
(73) Patentinhaber: Wacker Chemie AG, 81737 München (DE)
(72) Erfinder: Prasse, Marko, 01612, Glaubitz (DE)
(74) Vertreter: Budczinski, Angelika

(56) Entgegenhaltungen:
- EP-A- 1 024 170
- EP-A- 1 529 813
- EP-A- 1 734 079
- EP-A- 1 832 626
- WO-A-2004/022618
- WO-A-2005/003201
- WO-A-2006/070637
- WO-A-2007/085605

## Beschreibung

Die Erfindung betrifft unter Ausschluss von Wasser lagerfähige, bei Zutritt von Wasser bei Raumtemperatur zu Elastomeren vernetzbare Massen auf der Basis von Organosiliciumverbindungen, welche organische Säuren und basischen Stickstoff oder basischen Phosphor aufweisen, Verfahren zu deren Herstellung sowie daraus hergestellte Formkörper.

Unter Ausschluss von Wasser lagerfähige, bei Zutritt von Wasser bei Raumtemperatur zu Elastomeren vulkanisierende Einkomponenten-Dichtmassen sind bekannt. Diese Produkte werden in großen Mengen zum Beispiel in der Bauindustrie eingesetzt. Die Basis dieser Mischungen sind Polymere, die durch Silylgruppen terminiert sind, die reaktive Substituenten, wie OH-Gruppen oder hydrolysierbare Gruppen, wie zum Beispiel Alkoxygruppen, tragen. Üblicherweise enthalten solche Massen Aushärtungskatalysatoren, insbesondere Zinnverbindungen. Die Kennzeichnungspflicht von Dibutylzinnverbindungen verschärft sich deutlich, was die Forderung nach einer Substitution von Zinnverbindungen generell erhebt.

Im EP-B 538 881 werden Massen beschrieben, welche organische Säuren und Amine als Aushärtungskatalysatoren enthalten. Des Weiteren werden in EP-B 1 529 071 Massen beschrieben, welche über N-C an die Polymermatrix angebundene Silylreste enthalten. In EP-A 1 550 700, EP-A 1 624 027 und EP-A 1 659 155 werden Massen beschrieben, welche organische Säuren und Amine als Aushärtungskatalysatoren enthalten. Allerdings ist die Reaktivität dieser Massen nicht besonders hoch.

In EP-A 1 734 079 werden Massen beschrieben, welche organische Säuren und Amine als Aushärtungskatalysatoren enthalten. Allerdings wird hierbei mit deutlichem molaren Überschuss an basischen Stickstoff enthaltenden Verbindungen im Bezug zur organischen Säure gearbeitet, um die wenig reaktiven, gamma-Propylsilylgruppen an den Polymerenden zu katalysieren.

In WO-A 2007085620 und in WO-A 200785605 werden Massen beschrieben, welche organische Anhydride und Amine als Aushärtungskatalysatoren enthalten. Allerdings sind die Aminogruppen auch hier im molaren Überschuss und Zinnkatalysatoren werden zugesetzt.

Gegenstand der Erfindung sind vernetzbare Massen enthaltend
(A) Verbindungen der Formel

   A-[CR¹₂-SiRₐ(OR²)₃₋ₐ]ₓ (I),

   wobei
   A einen x-wertigen, über Stickstoff, Phosphor, Sauerstoff, Schwefel oder Carbonylgruppe gebundenen organischen Rest bedeutet,
   R gleich oder verschieden sein kann und einen einwertigen, gegebenenfalls substituierten Kohlenwasserstoffrest darstellt,
   R¹ gleich oder verschieden sein kann und Wasserstoffatom oder einen einwertigen, gegebenenfalls substituierten Kohlenwasserstoffrest darstellt,
   R² gleich oder verschieden sein kann und einen einwertigen, gegebenenfalls substituierten Kohlenwasserstoffrest darstellt,
   x eine ganze Zahl von 1 bis 10, bevorzugt 1, 2 oder 3, besonders bevorzugt 1 oder 2, ist und
   a 0, 1 oder 2, bevorzugt 0 oder 1, ist,
(B) Verbindung, welche mindestens ein basisches Element der 5. Hauptgruppe enthält, ausgewählt aus der Gruppe bestehend aus
   (B1) basischen Stickstoff aufweisende Verbindung und
   (B2) basischen Phosphor aufweisende Verbindung,
(C ) Säure ausgewählt aus der Gruppe bestehend aus
   (C1) phosphorhaltige Säure der Formel

      O=PR²⁰_{q}(OH)ᵣ(OR²¹)_{3-q-r} (III)

      und/oder deren Kondensate mit einer oder mehreren P-O-P-Bindungen und
   (C2) Carbonsäuren der Formel

      HOC(=O)R²² (IV),
   wobei
   R²⁰ gleich oder verschieden sein kann und gegebenenfalls substituierte Kohlenwasserstoffreste, die durch Sauerstoffatome unterbrochen sein können, bedeutet,
   R²¹ gleich oder verschieden sein kann und Wasserstoffatom oder gegebenenfalls substituierte Kohlenwasserstoffreste, die durch Sauerstoffatome unterbrochen sein können, bedeutet,
   R²² gleich oder verschieden sein kann und gegebenenfalls substituierte Kohlenwasserstoffreste, die durch Sauerstoffatome unterbrochen sein können, bedeutet,
   q 0, 1 oder 2 ist,
   r 1, 2 oder 3 ist und
   q+r 1, 2 oder 3 ist, sowie
(D) Silan der allgemeinen Formel

   X-CR¹'₂-SiR'_{b}Y_{3-b} (II)

   und/oder deren Teilhydrolysate, wobei
   X einen einwertigen, über Stickstoff, Phosphor, Sauerstoff, Schwefel oder Carbonylgruppe gebundenen organischen Rest bedeutet,
   R¹' gleich oder verschieden sein kann und eine für R¹ angegebene Bedeutung hat,
   R' gleich oder verschieden sein kann und eine für R angegebene Bedeutung hat,
   Y gleich oder verschieden sein kann und einen hydrolysierbaren Rest bedeutet und
   b gleich 0, 1 oder 2 ist.

Die Verbindungen (A) der Formel (I) ein Molekulargewicht von 2 000 g/mol bis 100 000 g/mol, besonders bevorzugt von 5 000 g/mol bis 50 000 g/mol, jeweils angegeben als Zahlenmittel.

Die Mischung aus den Komponenten (B), (C) und (D) hat einen pH-Wert von kleiner oder gleich 7, besonders bevorzugt von 4 bis 7, insbesondere von 5 bis 7.

Bevorzugt handelt es sich bei Rest R um gegebenenfalls substituierte, einwertige Kohlenwasserstoffreste mit 1 bis 18 Kohlenstoffatomen, besonders bevorzugt um Alkylreste, den Vinyl-, den 3,3,3-Trifluorprop-1-yl- und den Phenylrest, insbesondere um den Methylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, Halogenarylreste, wie der o-, m- und p-Chlorphenylrest, und der 2-Methoxyethylrest, der 2-Methoxypropylrest sowie der 2-(2-Methoxyethoxy)ethylrest.

Beispiele für Reste R¹ sind Wasserstoffatom, die für R angegebenen Reste sowie organische Polymerreste, wie z.B. solche, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisopren; Polyurethane; Polyester; Polyamide; Polyacrylate; Polymetacrylate; Vinylpolymer und Polycarbonate enthalten.

Bevorzugt handelt es sich bei Rest R¹ um Wasserstoffatom und Kohlenwasserstoffreste mit 1 bis 20 Kohlenstoffatomen, insbesondere um Wasserstoffatom.

Bei Rest A kann es sich um einen organischen Polymerrest handeln wie auch um die unten beschriebenen Reste X. Wenn es sich bei A um einen organischen Polymerrest handelt, dann ist der Rest R¹ bevorzugt Wasserstoffatom oder Kohlenwasserstoffrest mit 1 bis 20 Kohlenstoffatomen. Wenn A eine der für X unten angegebenen Bedeutungen hat, dann ist mindestens ein Rest R¹ ein organischer Polymerrest.

Bei Rest A handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisopren; Polyurethane; Polyester; Polyamide; Polyacrylate; Polymetacrylate; Vinylpolymer und Polycarbonate enthalten und die über -O-C(=O)-NH-, -NH-C(=O)O-, -NH-C(=O)-NH-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR''-, -P(=O)(OR'')₂-, -O-CH₂-C(OH)H-CH₂-NR''-, -O-CH₂-C(OH)H-CH₂-S-, -O-CH₂-C(OH)H-CH₂-C(=O)-, -O-CH₂-C(OH)H-CH₂-O-, 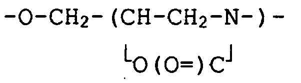 und 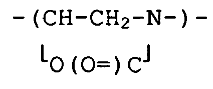 an die Gruppe -[CR¹₂-SiRₐ(OR²)₃₋ₐ] gebunden sind, wobei R'' gleich oder verschieden sein kann und Wasserstoffatom oder eine für R angegebene Bedeutung hat.

Besonders bevorzugt handelt es sich bei Rest A um Polyoxyalkylen- und Polyacrylatreste, insbesondere um Polyoxyalkylenreste, die über -O-C(=O)-NH-, -C(=0)-0-, -0-C(=0)-0-, -O-, -O-CH₂-C(OH)H-CH₂-NR''-, -O-CH₂-C(OH)H-CH₂-S-, -O-CH₂-C(OH)H-CH₂-C(=O)- und -O-CH₂-C(OH)H-CH₂-O-an die Gruppe -[CR¹₂-SiRₐ(OR²)₃₋ₐ] gebunden sind, wobei R'' gleich oder verschieden sein kann und Wasserstoffatom oder eine für R angegebene Bedeutung hat.

Falls es sich bei Rest A um Polyoxyalkylenreste A1 handelt, so enthalten diese bevorzugt Wiederholungseinheiten der Formel

-R⁷-O- (V),

wobei
R⁷ gleich oder verschieden sein kann und einen gegebenenfalls substituierten zweiwertigen Kohlenwasserstoffrest mit 1 bis 12 Kohlenstoffatomen, der linear oder verzweigt sein kann, bedeutet.

Die Polyoxyalkylenreste A1 enthalten bevorzugt mindestens 50%, besonders bevorzugt mindestens 70%, Wiederholungseinheiten der Formel (V), jeweils bezogen auf die Gesamtzahl der Wiederholungseinheiten.

Zusätzlich zu den Wiederholungseinheiten der Formel (V) können die Reste A1 noch weitere Einheiten, wie z.B. Amid-, Harnstoff-, Urethan-, Thiourethan-, Alkylen-, Arylen-, Ester-, Carbonat-, Imid- oder Imin-Einheiten, enthalten.

Beispiele für Rest R⁷ sind -CH₂-, -CH₂-CH₂-, -CH₂-CH(CH₃)-, -CH₂-CH₂-CH₂-, -CH₂-CH (-CH₂-CH₃) -, -CH(CH₃)-CH(CH₃)-, -CH₂-CH₂-CH₂-CH₂- und -CH₂-C (CH₃)₂-.

Bevorzugt handelt es sich bei Rest R⁷ um einen zweiwertigen, gegebenenfalls substituierten Kohlenwasserstoffrest mit 1 bis 4 Kohlenstoffatomen, besonders bevorzugt um einen zweiwertigen Kohlenwasserstoffrest mit 1 bis 4 Kohlenstoffatomen, ganz besonders bevorzugt -CH₂-CH₂- und -CH₂-CH(CH₃)-, insbesondere -CH₂-CH(CH₃)-.

Handelt es sich bei Rest A um Polyacrylatreste A2, so enthalten diese bevorzugt Wiederholungseinheiten der Formel

-CH₂-C(R⁸)(COOR⁹)- (VI),

wobei
R⁸ gleich oder verschieden sein kann und Wasserstoffatom oder Methylrest bedeutet und
R⁹ gleich oder verschieden sein kann und gegebenenfalls substituierte, einwertige Kohlenwasserstoffreste bedeutet.

Die Reste A2 enthalten bevorzugt mindestens 50%, besonders bevorzugt mindestens 70%, Wiederholungseinheiten der Formel (VI), jeweils bezogen auf die Gesamtzahl der Wiederholungseinheiten.

Zusätzlich zu den Wiederholungseinheiten der Formel (VI) können die Reste A2 noch weitere Gruppen enthalten, wie z.B. Styrol-, Perfluorethylen-, Maleinsäure- oder deren Mono- oder Diester- oder Abkömmlinge davon, wie Maleimide, Fumarsäure- oder deren Mono- oder Diester-, Nitril-, Vinylester-, wie Vinylacetat- oder Vinyllaurat-, Alken-, wie Ethylen-, Propylen- oder Octylen-, konjungierte Dien-, wie Butadiene- oder Isopren-, Vinylchlorid-, Vinylenchlorid-, Allylchlorid- oder Allylalkohol-Einheiten. Dem in der Polymerchemie üblichen Sprachgebrauch folgend werden diese Einheiten zum Teil nach den im Polymerisationsverfahren eingesetzten Monomeren benannt, was dem Fachmann bekannt ist.

Beispiele für Rest R⁹ sind die für Rest R angegebenen Beispiele.

Bevorzugt handelt es sich bei Rest R⁹ um gegebenenfalls substituierte Kohlenwasserstoffreste mit 1 bis 30 Kohlenstoffatomen, besonders bevorzugt mit 1 bis 20 Kohlenstoffatomen.

Beispiele für die Wiederholungseinheit nach Formel (VI) sind:
-CH₂-C(CH₃)(COOCH₃)-, -CH₂-C(CH₃)(COOCH₂CH₃)-,
-CH₂-C(CH₃)(COOCH₂CH₂CH₃)-, -CH₂-C(CH₃)(COOCH₂CH₂CH₂CH₃)-,
-CH₂-C(CH₃)(COOCH(CH₃)₂)-, -CH₂-C(H)(COOCH₂CH(CH₃)₂)-,
-CH₂-C(H)(COOC(CH₃)₃)-, -CH₂-C(CH₃)(COO(CH₂)₄CH₃)-,
-CH₂-C(CH₃)(COO(CH₂)₅CH₃)-, -CH₂-C(CH₃)(COO-CycloHexyl)-,
-CH₂-C(CH₃)(COO(CH₂)₆CH₃)-, -CH₂-C(CH₃)(COO(CH₂)₇CH₃)₋,
-CH₂-C(CH₃)(COOCH₂CH(CH₂CH₃)CH₂CH₂CH₂CH₃)-,
-CH₂-C(CH₃)(COOCH₂CH(CH₃)CH₂C(CH₃)₃)-, -CH₂-C(CH₃)(COO(CH₂)₈CH₃)-,
-CH₂-C(CH₃)(COO(CH₂)₉CH₃)-, -CH₂-C(CH₃)(COO(CH₂)₁₁CH₃)-,
-CH₂-C(CH₃)(COO(CH₂)₁₃CH₃)-, -CH₂-C(CH₃)(COO(CH₂)₁₅CH₃)-,
-CH₂-C(CH₃)(COO(CH₂)₁₇CH₃)-, -CH₂-C(CH₃)(COOPh)-,
-CH₂-C(CH₃)(COO(CH₂Ph)-, -CH₂-C(CH₃)(COOCH₂CH₂OCH₃)-,
-CH₂-C(CH₃)(COOCH₂CH₂OH)-, -CH₂-C(CH₃)(COOCH₂CH₂CH(OCH₃)CH₃)-,
-CH₂-C(CH₃)(COOCH₂CH(OH)CH₃)-, -CH₂-C(CH₃)(COO-Glycidyl)-,
-CH₂-C(CH₃)COO-CH₂CH₂CH₂Si(OCH₃)₃)-,
-CH₂-C(CH₃)(COO-CH₂CH₂CH₂Si(OCH₃)₂CH₃)-,
-CH₂-C(CH₃)(COO-(CH₂CH₂O)ₓH)-, -CH₂-C(CH₃)(COOCF₃)-,
-CH₂-C(CH₃)(COOCH₂CH₂CF₃)- und -CH₂-C(CH₃)(COOCH₂CH₂CF₂CF₃)-; sowie
-CH₂-C(H)(COOCH₃)-, -CH₂-C(H)(COOCH₂CH₃)-,
-CH₂-C(H)(COOCH₂CH₂CH₃)-, -CH₂-C(H)(COOCH₂CH₂CH₂CH₃)-,
-CH₂-C(H)(COOCH(CH₃)₂)-, -CH₂-C(H)(COOCH₂CH(CH₃)₂)-,
-CH₂-C(H)(COOC(CH₃)₃)-, -CH₂-C(H)(COO(CH₂)₄CH₃)-,
-CH₂-C(H)(COO(CH₂)₅CH₃)₋, -CH₂-C(CH₃)(COOCH₂CH₂OCH₃)-,
-CH₂-C(CH₃)(COOCH₂CH₂OCH₂CH₃)-, -CH₂-C(CH₃)(COOCH₂CH₂CH(OCH₃)CH₃)-
und -CH₂-C(H)(COOCH₂CH(CH₂CH₃)CH₂CH₂CH₂CH₃)-.

Besonders bevorzugt sind als Wiederholungseinheiten der Formel (VI) -CH₂-C(CH₃)(COOCH₃)-, -CH₂-C(CH₃)(COOCH₂CH₃)-,
-CH₂-C(CH₃)(COOCH₂CH₂CH₃)-, -CH₂-C(CH₃)(COOCH₂CH₂CH₂CH₃)-,
-CH₂-C(CH₃)(COOCH(CH₃)₂)-, -CH₂-C(H)(COOCH₂CH(CH₃)₂)-,
-CH₂-C(H)(COOC(CH₃)₃)-, -CH₂-C(CH₃)(COO(CH₂)₄CH₃)-,
-CH₂-C(CH₃)(COO(CH₂)₅CH₃)₋, -CH₂-C(CH₃)COO-CycloHexyl)-,
-CH₂-C(CH₃)(COO(CH₂)₆CH₃)₋, -CH₂-C(CH₃)(COO(CH₂)₇CH₃)-,
-CH₂-C(CH₃)(COOCH₂CH(CH₂CH₃)CH₂CH₂CH₂CH₃)-,
-CH₂-C(CH₃)(COOCH₂CH(CH₃)CH₂C(CH₃)₃)-, -CH₂-C(CH₃)(COO(CH₂)₈CH₃)-,
-CH₂-C(CH₃)(COO(CH₂)₉CH₃)-, -CH₂-C(CH₃)(COO(CH₂)₁₁CH₃)-,
-CH₂-C(CH₃)(COO(CH₂)₁₃CH₃)-, -CH₂-C(CH₃)(COO(CH₂)₁₅CH₃)-,
-CH₂-C(CH₃)(COO(CH₂)₁₇CH₃)-, -CH₂-C(CH₃)(COOCH₂CH₂OCH₃)- und
-CH₂-C(CH₃)(COOCH₂CH₂CH(OCH₃)CH₃)-; sowie
-CH₂-C(H)(COOCH₃)-, -CH₂-C(H)(COOCH₂CH₃)-,
-CH₂-C(H)(COOCH₂CH₂CH₃)-, -CH₂-C(H)(COOCH₂CH₂CH₂CH₃)-,
-CH₂-C(H)(COOCH(CH₃)₂)-, -CH₂-C(H)(COOCH₂CH(CH₃)₂)-,
-CH₂-C(H)(COOC(CH₃)₃)-, -CH₂-C(H)(COO(CH₂)₄CH₃)-,
-CH₂-C(H)(COO(CH₂)₅CH₃)₋, -CH₂-C(CH₃)(COOCH₂CH₂OCH₃)-,
-CH₂-C(CH₃)(COOCH₂CH₂OCH₂CH₃)-, -CH₂-C(CH₃)(COOCH₂CH₂CH(OCH₃)CH₃)- und -CH₂-C(H)(COOCH₂CH(CH₂CH₃)CH₂CH₂CH₂CH₃)-.

Bevorzugt enthalten die Reste A, besonders bevorzugt die Polyoxyalkylenreste A1, Einheiten der Formel

-NR¹⁰-C(=O)- (VII),

wobei
R¹⁰ gleich oder verschieden sein kann und Wasserstoffatom oder gegebenenfalls substituierten, einwertigen Kohlenwasserstoffrest bedeutet.

Beispiele für Rest R¹⁰ sind Wasserstoffatom und die für Rest R angegebenen Beispiele.

Bevorzugt handelt es sich bei Rest R¹⁰ um Wasserstoffatom oder gegebenenfalls substituierte Kohlenwasserstoffreste mit 1 bis 12 Kohlenstoffatomen, besonders bevorzugt Wasserstoffatom oder Kohlenwasserstoffreste mit 1 bis 6 Kohlenstoffatomen.

Beispiele für Rest R² sind die für Rest R angegebenen Beispiele.

Bevorzugt handelt es sich bei Rest R² um Alkylreste mit 1 bis 12 Kohlenstoffatomen, besonders bevorzugt um Alkylreste mit 1 bis 4 Kohlenstoffatomen, insbesondere um den Methyl- und Ethylrest.

Beispiele für Komponente (A) sind Organyloxysilylmethylgruppen aufweisende organische Polymere, wie Polyacrylate, Vinylpolymere, Polyurethane und Polyglykole, die linear oder verzweigt sein können. Die Herstellung dieser Polymere kann durch bekannte Verfahren erfolgen, wie Additionsreaktionen, wie z.B. der Hydrosilylierung, Michael-Addition, Diels-Alder-Addition, der Addition von Isocyanat an Epoxide oder an aktiven Wasserstoff aufweisende reaktive Gruppen, wie Amine, Amide, Hydroxyl- oder Mercaptogruppen, der Addition von Epoxiden an aktiven Wasserstoff aufweisende reaktive Gruppen, wie Amine, Carbonylgruppen, Phenole oder Mercaptogruppen, sowie der Addition von Aziridine an Carbonylgruppen oder der Copolymerisation von Vinylsilanen mit organischen Doppelbindung aufweisenden Monomeren bzw. der Pfropfung von Vinylsilanen an Vinylpolymere. Die Herstellmethoden können gegebenenfalls miteinander kombiniert werden.

Als Komponente (A) können aber auch Copolymere aus Siloxanblöcken und organischen Polymeren verwendet werden, wie z.B. in EP-B1 1 370 602 beschrieben, die zum Offenbarungsgehalt der vorliegenden Anmeldung zu zählen ist.

Bei den erfindungsgemäß eingesetzten Polymeren (A) kann es sich um Homopolymere wie auch um Copolymere handeln, die jeweils linear oder verzweigt sein können. Die Komponente (A) kann dabei die Gruppen -[CR¹₂-SiRₐ(OR²)₃₋ₐ] an beliebigen Stellen im Polymer aufweisen, wie etwa kettenständig und/oder endständig.

Weitere Beipiele für die erfindungsgemäß eingesetzte Komponente (A) sind solche der Formel (I), in denen A die Bedeutung von X hat und mindestens ein Rest R¹ einen polymeren organischen Rest darstellt, wie z.B. Polyacrylate, Vinylpolymere, Polyurethane und Polyglykole, die linear oder verzweigt sein können, die jedoch nicht bevorzugt sind.

Die erfindungsgemäß eingesetzte Komponente (A) hat eine Viskosität von bevorzugt 100 bis 1 000 000 mPas, besonders bevorzugt 1000 bis 350 000 mPas, jeweils bei 25°C.

Komponente (A) sind handelsübliche Produkte bzw. nach in der Chemie gängigen Methoden herstellbar.

Bevorzugt handelt es sich bei Komponente (B1) um solche, ausgewählt aus der Gruppe bestehend aus Verbindungen (B11) der Formel

NR¹¹₃ (VIII),

wobei R¹¹ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, bedeutet, mit der Maßgabe, dass in Formel (VIII) höchstens zwei R¹¹ die Bedeutung von Wasserstoffatom haben,
und
aliphatischen cyclischen Aminen, wie beispielsweise Piperidin und Morpholin,

Organosiliciumverbindungen (B12) mit mindestens einem basischen Stickstoff aufweisenden organischen Rest enthaltend Einheiten der Formel

R¹²ₖD₁Si(OR¹³)ₘO(₄₋ₖ₋₁₋ₘ)_{/2} (IX),

worin
_{R}¹² gleich oder verschieden sein kann und einen einwertigen, gegegebenenfalls substituierten SiC-gebundenen, von basischem Stickstoff freien organischen Rest bedeutet,
_{R}¹³ gleich oder verschieden sein kann und Wasserstoffatom oder gegebenenfalls substituierte Kohlenwasserstoffreste bedeutet, D gleich oder verschieden sein kann und einen einwertigen, Sigebundenen Rest mit basischem Stickstoff bedeutet,
k 0, 1, 2, oder 3,
1 0, 1, 2, 3 oder 4 und
m 0, 1, 2 oder 3 ist,
mit der Maßgabe, dass die Summe aus k+1+m kleiner oder gleich 4 ist und pro Molekül mindestens ein Rest D anwesend ist,
sowie
Verbindungen (B13) der Formel

(R¹⁴₂N)₂-C=NR¹⁵ (X)

wobei R¹⁴ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Imingruppen, Imidgruppen oder (Poly)glykolresten substituiert sind, wobei letztere aus Oxyethylen- und/oder Oxypropyleneinheiten aufgebaut sind, bedeutet,
R¹⁵ Wasserstoffatom oder gegebenenfalls substituierte Kohlenwasserstoffreste bedeutet.

Beispiele für Rest R¹¹ sind die für R angegebenen Beispiele für gegebenenfalls substituierte Kohlenwasserstoffreste sowie Aminoalkylreste, wie der 3-Aminopropylrest, der 2-Aminopropylrest, 6-Aminohexylrest, 2-Aminoethylrest, 2-,3- und 4-Amino-cyclohexylrest, N-Butyl-2-aminoethylrest und der N,N-Dimethyl-2-aminoethylrest, Hydroxyalkylreste, wie der 2-Hydroxyethylrest, sowie Reste, bei denen zwei Substituenten zu einem Ring verbunden sein können, der auch noch andere Elemente anstelle der Kohlenstoffatome enthalten kann, wie der Rest -CH₂-CH₂-O-CH₂-CH₂-, -CH₂-CH₂-NH-CH₂-CH₂-, -CH₂-CH₂-CH₂-CH₂-CH₂-, -CH₂-CH₂-NH-CH₂- und -CH₂-CH₂-CH₂-CH₂-.

Beispiele für Verbindungen (B11) sind CH₃CH₂(CH₃)CHNH₂, cyclo-C₆H₁₁NH₂, (CH₃CH₂)₂N(CH₂)₃NH₂, (CH₃(CH₂)₃)₂N(CH₂)₃NH₂, CH₃CH₂CH₂CH₂NH₂, CH₃(CH₂)₇NH₂, (CH₃)₂CH(CH₂₎₅NH_{2,} (CH₃CH₂(CH₃)CH)₂NH, (cyclo-C₆H₁₁)₂NH, (CH₃CH₂CH₂CH₂)₂NH, (CH₃(CH₂)₇)₂NH, ((CH₃)₂CH(CH₂)₅)₂NH, (CH₃CH₂CH₂CH₂)₃N, (CH₃(CH₂)₇)₃N, ((CH₃)₂CH(CH₂)₅)₃N, cyclische Amine, wie Pyperidin, Piperazin, Morpholin, 3-Morpholino-propylamin, Imidazolidin und Pyrrolidin.

Bei Rest R¹¹ handelt es sich vorzugsweise um Kohlenwasserstoffreste mit 1 bis 18 Kohlenstoffatomen oder um Aminoalkylreste mit 1 bis 18 Kohlenstoffatomen, wobei der Methyl-, Ethyl-, n-Propyl-, Isopropyl-, n-Butyl-, iso-Butyl-, sec-Butyl-, 2-Ethylhexyl-, Cyclohexyl-, 1-Methylheptyl-, n-Octylrest, 3-Aminopropyl-, der 2-Aminopropyl-, 6-Aminohexyl-, 2-Aminoethyl-, der N,N-Dimethyl-2-aminoethyl- und der N,N-Dibutyl-2-aminoethylrest sowie die Reste -CH₂-CH₂-O-CH₂-CH₂-, -CH₂-CH₂-NH-CH₂-CH₂-, -CH₂-CH₂-CH₂-CH₂-CH₂-, -CH₂-CH₂-NH-CH₂- und -CH₂-CH₂-CH₂-CH₂- besonders bevorzugt sind, insbesondere der Methyl-, Ethyl-, n-Butyl-, 3-Aminopropyl-, 6-Aminohexyl-, 2-Aminoethyl-, der N,N-Dimethyl-2-aminoethyl- und der N,N-Dibutyl-2-aminoethylrest sowie die Reste -CH₂-CH₂-O-CH₂-CH₂-, -CH2-CH2-NH-CH2-CH2- und -CH₂-CH₂-CH₂-CH₂-CH₂-.

Beispiele für Rest R¹² sind die für R angegebenen Beispiele für gegebenenfalls substituierte Kohlenwasserstoffreste.

Bei Rest R¹² handelt es sich vorzugsweise um Kohlenwasserstoffreste mit 1 bis 18 Kohlenstoffatomen, wobei der Methyl-, Ethyl- und n-Propylrest besonders bevorzugt sind, insbesondere der Methylrest.

Beispiele für gegebenenfalls substituierte Kohlenwasserstoffreste R¹³ sind die für Rest R² angegebenen Beispiele.

Bei den Resten R¹³ handelt es sich vorzugsweise um Wasserstoffatom und gegebenenfalls mit Stickstoff und Sauerstoff substituierte Kohlenwasserstoffreste mit 1 bis 18 Kohlenstoffatomen, besonders bevorzugt um Wasserstoffatom und Kohlenwasserstoffreste mit 1 bis 3 Kohlenstoffatomen, insbesondere um Wasserstoffatom, Methyl- und Ethylrest.

Beispiele für Reste D sind Reste der Formeln H₂N(CH₂)₂-, H₂N(CH₂)₃-, H₂N(CH₂)₂NH(CH₂)₂₋, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, H₃CNH(CH₂)₂-, C₂H₅NH(CH₂)₂-, H₂N(CH₂)₄-, H₂N(CH₂)₅-, H(NHCH₂CH₂)₃-, C₄H₉NH(CH₂)₂NH(CH₂)₂-, cyclo-C₆H₁₁NH(CH₂)₃-, cyclo-C₆H₁₁NH(CH₂)₂-, (CH₃)₂N(CH₂)₃-, (CH₃)₂N(CH₂)₂-, (C₂H₅)₂N(CH₂)₃-, cyclo-C₆H₁₁NH-, CH₃CH₂CH(CH₃)NH- und (C₂H₅)₂N(CH₂)₂-.

Bevorzugt handelt es sich bei Rest D um H₂N(CH₂)₃-, H₂N(CH₂)₂NH(CH₂)₃-, H₃CNH(CH₂)₃-, C₂H₅NH(CH₂)₃-, cyclo-C₆H₁₁NH-, CH₃CH₂CH(CH₃)NH- und cyclo-C₆H₁₁NH(CH₂)₃-Rest, wobei H₂N(CH₂)₃-, H₂N(CH₂)₂NH(CH₂)₃- und cyclo-C₆H₁₁NH(CH₂)₃-Rest besonders bevorzugt sind.

Bei den erfindungsgemäß eingesetzten Organosiliciumverbindungen (B12) kann es sich sowohl um Silane handeln, d.h. Verbindungen der Formel (IX) mit k+l+m=4, als auch um Siloxane, d.h. Verbindungen enthaltend Einheiten der Formel (IX) mit k+l+m≤3. Falls es sich bei den erfindungsgemäß eingesetzten Organosiliciumverbindungen um Organopolysiloxane handelt, sind solche, die aus Einheiten der Formel (IX) bestehen, bevorzugt.

Handelt es sich bei den Organosiliciumverbindungen enthaltend Einheiten der Formel (IX) um Silane, so ist k bevorzugt 0, 1 oder 2, besonders bevorzugt 0 oder 1, l bevorzugt 1 oder 2, besonders bevorzugt 1, und m bevorzugt 1, 2 oder 3, besonders bevorzugt 2 oder 3, mit der Maßgabe, dass die Summe aus k+l+m gleich 4 ist.

Beispiele für die erfindungsgemäß gegebenenfalls eingesetzten Silane der Formel (IX) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, (CH₃)₃Si-NH-Si(CH₃)₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH_{3,} (CH₃)₂Si(NHCH(CH₃)CH₂CH₃)₂, (cyclo-C₆H₁₁NH)₃Si-CH₃, (CH₃CH₂(CH₃)CHNH)₃Si-CH₃, HN((CH₂)₃-Si(OCH₃)₃)₂ und HN((CH₂)₃-Si(OC₂H₅)₃)₂ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃ sowie cyclo-C₆H₁₁NH(CH₂)₃-Si(OH)₂CH₃ bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃, H₂N(CH₂)₂NH(CH₂)₃-Si(OH)₃ und H₂N(CH₂)₂NH(CH₂)₃-Si(OH)₂CH₃ sowie jeweils deren Teilhydrolysate besonders bevorzugt sind.

Falls es sich bei der Organosiliciumverbindung enthaltend Einheiten der Formel (IX) um Organopolysiloxane handelt, ist der durchschnittliche Wert von k vorzugsweise zwischen 0,5 und 2,5, besonders bevorzugt zwischen 1, 4 und 2,0, der durchschnittliche Wert von l vorzugsweise zwischen 0,01 und 1,0, besonders bevorzugt zwischen 0,01 und 0,6, und der durchschnittliche Wert von m vorzugsweise zwischen 0 und 2,0, besonders bevorzugt zwischen 0 und 0,2, mit der Maßgabe, dass die Summe aus k, l und m kleiner oder gleich 3 ist.

Beispiele für die erfindungsgemäß gegebenenfalls eingesetzten Siloxane enthaltend Einheiten der Formel (IX) sind
H₂N(CH₂)₃-Si(OCH₃)₂-O-Si(CH₃)(OCH₃)₂,
H₂N(CH₂)₃-Si(OC₂H₅)₂-O-Si(CH₃)(OCH₃)₂,
H₂N(CH₂)₃-Si(OC₂H₅)₂-O-Si(CH₃)(OC₂H₅)₂,
H₂N(CH₂)₃-Si(OCH₃)(CH₃)-O-Si(CH₃)(OCH₃)₂,
H₂N(CH₂)₃-Si(OCH₃)(CH₃)-O-Si(OCH₃)₃,
H₂N(CH₂)₃-Si(OC₂H₅)(CH₃)-O-Si(OCH₃)₃,
H₂N(CH₂)₂NH(CH₂)₃-Si(OCH₃)₂-O-Si(CH₃)(OCH₃)₂,
H₂N(CH₂)₂NH(CH₂)₃-Si(OC₂H₅)₂-O-Si(CH₃)(OCH₃)₂,
H₂N(CH₂)₂NH(CH₂)₃-Si(OC₂H₅)₂-O-Si(CH₃)(OC₂H₅)₂,
H₂N(CH₂)₂NH(CH₂)₃-Si(OCH₃)(CH₃)-O-Si(CH₃)(OCH₃)₂,
H₂N(CH₂)₂NH(CH₂)₃-Si(OCH₃)(CH₃)-O-Si(OCH₃)₃,
H₂N(CH₂)₂NH(CH₂)₃-Si(OC₂H₅)(CH₃)-O-Si(OCH₃)₃,
cyclo-C₆H₁₁NH(CH₂)₃-Si(OCH₃)₂-O-Si(CH₃)(OCH₃)₂,
cyclo-C₆H₁₁NH(CH₂)₃-Si(OC₂H₅)₂-O-Si(CH₃)(OCH₃)₂,
cyclo-C₆H₁₁NH(CH₂)₃-Si(OC₂H₅)₂-O-Si(CH₃)(OC₂H₅)₂,
cyclo-C₆H₁₁NH(CH₂)₃-Si(OCH₃)(CH₃)-O-Si(CH₃)(OCH₃)₂,
cyclo-C₆H₁₁NH(CH₂)₃-Si(OCH₃)(CH₃)-O-Si(OCH₃)₃,
cyclo-C₆H₁₁NH(CH₂)₃-Si(OC₂H₅)(CH₃)-O-Si(OCH₃)₃,
H₂N(CH₂)₃-Si(OCH₃)₂-(O-Si(CH₃)₂)₀₋₁₀₀-(O-Si(CH₃)-(CH₂)₃NH₂)₀-₁₀₀-0-Si(OCH₃)₂-(CH₂)₃NH₂,
H₂N(CH₂)₂NH(CH₂)₃-Si(OCH₃)₂-(O-Si(CH₃)₂)₀₋₁₀₀-(O-Si(CH₃)-(CH₂)₃
NH(CH₂)₂NH₂)₀₋₁₀₀-0-Si(OCH₃)₂-(CH₂)₃NH(CH₂)₂NH₂,
H₂N(CH₂)₃-Si(OCH₂CH₃)₂-(O-Si(OCH₂CH₃)₂)₁₋₁₀₀-(O-Si(OCH₂CH₃)(CH₂)₃NH₂)₀₋₁₀₀-O-Si(OCH₂CH₃)₂-(CH₂)₃NH₂,
Si(OCH₂CH₃)₃-O-Si(OCH₂CH₃)₂)₀₋₁₀₀-(O-Si(OCH₂CH₃)(CH₂)₃NH₂)₁₋₁₀₀-O-Si(OCH₂CH3)₃ und
cyclo-C₆H₁₁NH(CH₂)₃-Si(OCH₃)₂-(O-Si(CH₃)₂)₀₋₁₀₀-(O-Si(CH₃)-(CH₂)₃NH cyclo-C₆H₁₁)₀₋₁₀₀-O-Si(OCH₃)₂-(CH₂)₃NH cyclo-C₆H₁₁.

Beispiele für Rest R¹⁴ sind die für R angegebenen Beispiele für gegebenenfalls substituierte Kohlenwasserstoffreste, das Wasserstoffatom sowie Aminoimidreste, wie der Aminoimidrest und der N,N-Dimethylaminoimidrest.

Bei Rest R¹⁴ handelt es sich vorzugsweise um Wasserstoffatom, Kohlenwasserstoffreste mit 1 bis 18 Kohlenstoffatomen oder um Aminoimidreste mit 1 bis 18 Kohlenstoffatomen, wobei Wasserstoffatom, der Methyl-, Isopropyl-, Phenyl-, ortho-Tolyl-, Aminoimid- und der N,N-Dimethylaminoimidrest besonders bevorzugt sind, insbesondere Wasserstoffatom, der Methyl- und der Phenylrest.

Beispiele für Rest R¹⁵ sind Wasserstoffatom und die für R angegebenen Beispiele für gegebenenfalls substituierte Kohlenwasserstoffreste.

Bei Rest R¹⁵ handelt es sich vorzugsweise um Wasserstoffatom und gegebenenfalls substituierte Kohlenwasserstoffreste mit 1 bis 18 Kohlenstoffatomen, wobei Wasserstoffatom, der Cyanorest, der 3-(Trimethoxysilylpropyloxy)-2-Hydroxypropylrest und der Trimethoxysilylpropylrest besonders bevorzugt sind, insbesondere Wasserstoffatom.

Beispiele für Verbindungen (B13) sind 1,3-Diphenylguanidin, 1,3-Di-o-tolylguanidin, 1,3-Diisopropylguanidin, 1,3-Dimethylguanidin, Dicyandiamid, 1,1,3,3-Tetramethylguanidin, (1,1,3,3-Tetramethylguanidyl)propyltrimethoxysilan, [(1,1,3,3-Tetramethylguanidyl)propyl]methyldimethoxysilan, 1-o-tolyl-biguanidin oder 1,1,5,5-Tetramethylbiguanidin.

Bevorzugt handelt es sich bei Komponente (B1) um H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, (CH₃)₂Si(NHCH(CH₃)CH₂CH₃)₂, H₂N(CH₂)₃-Si(OCH₃)₂-(O-Si(CH₃)₂)₀₋₁₀₀-(O-Si(CH₃)-(CH₂)₃NH₂)₀₋₁₀₀-0-Si(OCH₃)₂-(CH₂)₃NH₂, H₂N(CH₂)₂NH(CH₂)₃-Si(OCH₃)₂-(O-Si(CH₃)₂)₀₋₁₀₀-(O-Si(CH₃)-(CH₂)₃ NH(CH₂)₂NH₂)₀₋₁₀₀-0-Si(OCH₃)₂-(CH₂)₃NH(CH₂)₂NH₂, H₂N(CH₂)₃-Si(OCH₂CH₃)₂-(O-Si(OCH₂CH₃)₂)₁₋₁₀₀-(O-Si(OCH₂CH₃)(CH₂)₃NH₂)₀₋₁₀₀-O-Si(OCH₂CH₃)₂-(CH₂)₃NH₂, Si(OCH₂CH₃)₃-(O-Si(OCH₂CH₃)₂)₀₋₁₀₀-(O-Si(OCH₂CH₃)(CH₂)₃NH₂)₁₋₁₀₀-O-Si(OCH₂CH₃)₃, (cyclo-C₆H₁₁NH)₃Si-CH₃, (CH₃CH₂(CH₃)CHNH)₃Si-CH₃, (CH₃CH₂(CH₃)CHNH)₂Si-(CH₃)₂, CH₃CH₂(CH₃)CHNH₂, cyclo-C₆H₁₁NH₂, (CH₃CH₂)₂N(CH₂)₃NH₂, (CH₃(CH₂)₃)₂N(CH₂)₃NH₂, CH₃CH₂CH₂CH₂NH₂, CH₃(CH₂)₇NH₂, (CH₃)₂CH(CH₂)₅NH₂, (CH₃CH₂(CH₃)CH)₂NH, (cyclo-C₆H₁₁)₂NH, (CH₃CH₂CH₂CH₂)₂NH, (CH₃(CH₂)₇)₂NH, ((CH₃)₂CH(CH₂)₅)₂NH, (CH₃CH₂CH₂CH₂)₃N, (CH₃(CH₂)₇)₃N, ((CH₃)₂CH(CH₂)₅)₃N, ((CH₃)₂N)₂C=NH, ((CH₃)NH)₂C=NH, ((C₆H₅)NH)₂C=NH, ((CH₃)₂N-)C(=NH)-NH-C(=NH)-N(CH₃)₂, ((CH₃)₂N)₂C=N-CH₂CH₂CH₂Si(OMe)₃, ((CH₃)₂N)₂C=N-CH₂CH(OH)CH₂O(CH₂)₃Si(OMe)₃, wobei H₂N(CH₂)₃-Si(OCH₃)₃, H₂N(CH₂)₃-Si(OC₂H₅)₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂-(O-Si(CH₃)₂)₀₋₁₀₀-(O-Si(CH₃)-(CH₂)₃NH(CH₂)₂NH₂)₀₋₁₀₀-0-Si(OCH₃)₂-(CH₂)₃NH(CH₂)₂NH₂, H₂N(CH₂)₃-Si(OCH₂CH₃)₂-(O-Si(OCH₂CH₃)₂)₁₋₁₀₀-(0-Si(OCH₂CH₃)(CH₂)₃NH₂)₀₋₁₀₀-O-Si(OCH₂CH₃)₂-(CH₂)₃NH₂, Si(OCH₂CH₃)₃-(O-Si(OCH₂CH₃)₂)₀₋₁₀₀-(O-Si(OCH₂CH₃)(CH₂)₃NH₂)₁₋₁₀₀-O-Si(OCH₂CH₃)₃, (CH₃CH₂CH₂CH₂)₂NH, ((CH₃)₂N)₂C=NH, ((CH₃)₂N)₂C=N-CH₂CH₂CH₂Si(OMe)₃ und ((CH₃)₂N)₂C=N-CH₂CH(OH)CH₂O(CH₂)₃Si(OMe)₃, besonders bevorzugt sind.

Komponente (B1) sind handelsübliche Produkte bzw. nach in der Chemie gängigen Verfahren herstellbar.

Bevorzugt handelt es sich bei den basischen Phosphor aufweisenden Verbindungen (B2) um solche der Formel

[R¹⁶₄P⁺]ₛ Z^{s-} (XI),

wobei
s gleich 1, 2 oder 3 ist,
R¹⁶ gleich oder verschieden sein kann und gegebenenfalls substituierte Kohlenwasserstoffreste mit 1 bis 40 Kohlenstoffatomen bedeutet,
Z gleich eine Gruppe der Formel

O=PR¹⁷ₙ(O⁻)ₘ(OR¹⁸)₃₋ₙ₋ₘ (XII)

und/oder deren Kondensate mit einer oder mehreren P-O-P-Bindungen
oder eine Gruppe der Formel

-OC(=O)R¹⁹ (XIII)

ist, wobei
R¹⁷ gleich oder verschieden sein kann und gegebenenfalls substituierte Kohlenwasserstoffreste, die durch Sauerstoffatome unterbrochen sein können, bedeutet,
R¹⁸ gleich oder verschieden sein kann und Wasserstoffatom oder gegebenenfalls substituierte Kohlenwasserstoffreste, die durch Sauerstoffatome unterbrochen sein können, bedeutet,
R¹⁹ gleich oder verschieden sein kann und gegebenenfalls substituierte Kohlenwasserstoffreste, die durch Sauerstoffatome unterbrochen sein können, bedeutet,
n 0, 1 oder 2 ist,
m 1, 2 oder 3 ist und
m+n 1, 2 oder 3 ist.

Beispiele für R¹⁶ sind die für Rest R oben angegebenen Reste.

Bevorzugt handelt es sich bei Rest R¹⁶ um gegebenenfalls substituierte Kohlenwasserstoffreste mit 1 bis 20 Kohlenstoffatomen, besonders bevorzugt um Kohlenwasserstoffreste mit 1 bis 16 Kohlenstoffatomen, insbesondere um Kohlenwasserstoffreste mit 1 bis 8 Kohlenstoffatomen.

Beispiele für Reste R¹⁷ sind die für Rest R angegebenen Beispiele für Kohlenwasserstoffreste, die mit Halogenatomen, Aminogruppen, Ethergruppen, Estergruppen, Epoxygruppen, Mercaptogruppen, Cyanogruppen, (Poly)glykolresten, Gruppen -C(O)O⁻, -P(O)(R²³)O⁻, -P(O)(OR²³)O⁻, -C(O)OH, -C(O)OR²³, -P(O)(R²³)OH oder -P(O)(OR²³)OH substituiert sein können und/oder die durch Sauerstoffatome unterbrochen sein können, wobei R²³ jeweils gleich oder verschieden sein kann und eine für R¹⁶ angegebene Bedeutung hat, wie beispielsweise der 4-Carbonsäurecyclohexyl-, Cyclohexyl-4-carbonat-, O-Ethyl-cyclohexyl-4-carbonat-, 11-Carbonsäureundecyl-, 11-Undecanoat-, O-Isooctyl-11-undecanoat-, Lauryldiethylenglycolatmethyl-, 4-Nonylphenylpentaethylenglykolatmethyl-, Oleyletherhexaethylenglykolatmethyl- oder der 4-tert-Butylphenyletheroligoethylenglykolatmethylrest.

Bevorzugt handelt es sich bei Rest R¹⁷ um gegebenenfalls mit Halogenatomen, Aminogruppen, Ethergruppen, Estergruppen, Epoxygruppen, Mercaptogruppen, Cyanogruppen, (Poly)glykolresten, Gruppen -C(O)O⁻, -P(O)(R²³)O⁻, -P(O)(OR²³)O⁻, -C(O)OH, -C(O)OR²³, -P(O)(R²³)OH oder -P(O)(OR²³)OH substituierte Kohlenwasserstoffreste mit 1 bis 50 Kohlenstoffatomen, die durch Sauerstoffatome unterbrochen sein können, besonders bevorzugt um Kohlenwasserstoffreste mit 1 bis 30 Kohlenstoffatomen, insbesondere um Kohlenwasserstoffreste mit 1 bis 20 Kohlenstoffatomen, wobei R²³ jeweils gleich oder verschieden sein kann und eine für R¹⁶ angegebene Bedeutung hat.

Beispiele für Rest R¹⁹ sind die für den Rest R¹⁷ angegebenen Beispiele.

Bevorzugt handelt es sich bei Rest R¹⁹ um gegebenenfalls mit Halogenatomen, Aminogruppen, Ethergruppen, Estergruppen, Epoxygruppen, Mercaptogruppen, Cyanogruppen, (Poly)glykolresten, Gruppen -C(O)O⁻, -P(O)(R²³)O⁻, -P(O)(OR²³)O⁻, -C(O)OH, -C(O)OR²³, -P(O)(R²³)OH oder -P(O)(OR²³)OH substituierte Kohlenwasserstoffreste mit 1 bis 50 Kohlenstoffatomen, die durch Sauerstoffatome unterbrochen sein können, besonders bevorzugt um Kohlenwasserstoffreste mit 1 bis 50 Kohlenstoffatomen, die durch Sauerstoffatome unterbrochen sein können und/oder die mit der Gruppe -C(O)OR²³, -C(O)O⁻ oder -C(O)OH substituiert sein können, insbesondere um Kohlenwasserstoffreste mit 1 bis 20 Kohlenstoffatomen, die durch Sauerstoffatome unterbrochen sein können und/oder die mit der Gruppe -C(O)OR²³, -C(O)O⁻ oder -C(O)OH, substituiert sein können, wobei R²³ jeweils gleich oder verschieden sein kann und eine für R¹⁶ angegebene Bedeutung hat.

Beispiele für Reste R¹⁸ sind Wasserstoffatom, die für Rest R¹⁶ angegebenen Beispiele sowie der Lauryldiethylenglycolatethyl-, 4-Nonylphenylpentaethylenglykolatethyl-, Oleyletherhexaethylenglykolatethyl- oder der 4-tert-Butylphenyletheroligoethylenglykolatethylrest.

Bevorzugt handelt es sich bei Rest R¹⁸ um Wasserstoffatom und um gegebenenfalls substituierte Kohlenwasserstoffreste mit 1 bis 50 Kohlenstoffatomen, die durch Sauerstoffatome unterbrochen sein können, besonders bevorzugt um Wasserstoffatom, um Kohlenwasserstoffreste mit 1 bis 20 Kohlenstoffatomen oder um Kohlenwasserstoffreste mit 1 bis 40 Kohlenstoffatomen, die durch Sauerstoffatome unterbrochen sind, insbesondere um Wasserstoffatom oder um Kohlenwasserstoffreste mit 1 bis 16 Kohlenstoffatomen.

Bevorzugt ist s gleich 1 oder 2, besonders bevorzugt ist s gleich 1.

Bevorzugt handelt es sich bei Anion Z um Acylatgruppen mit 4 bis 31 Kohlenstoffatomen, um Phosphatgruppen mit 4 bis 30 Kohlenstoffatomen, um Hydrogenphosphatgruppen mit 2 bis 15 Kohlenstoffatomen, um Phosphonatgruppen mit 2 bis 15 Kohlenstoffatomen, um Hydrogenphosphonatgruppen mit 2 bis 15 Kohlenstoffatomen oder um Phosphinatgruppen mit 4 bis 30 Kohlenstoffatomen.

Besonders bevorzugt handelt es sich bei Anion Z um Acylatgruppen mit 6 bis 25 Kohlenstoffatomen, um Phosphatgruppen mit 6 bis 20 Kohlenstoffatomen, um Hydrogenphosphatgruppen mit 4 bis 10 Kohlenstoffatomen, um Phosphonatgruppen mit 2 bis 12 Kohlenstoffatomen, um Hydrogenphosphonatgruppen mit 2 bis 12 Kohlenstoffatomen und um Phosphinatgruppen mit 6 bis 24 Kohlenstoffatomen.

Insbesondere handelt es sich bei Anion Z um Acylatgruppen mit 2 bis 25 Kohlenstoffatomen, um Phosphonatgruppen mit 2 bis 10 Kohlenstoffatomen, um Hydrogenphosphonatgruppen mit 2 bis 10 Kohlenstoffatomen oder um Phosphinatgruppen mit 8 bis 20 Kohlenstoffatomen.

Ganz besonders bevorzugt handelt es sich bei Anion Z um Acylatgruppen oder um Phosphinatgruppen.

Beispiele für Verbindungen (B2) sind
Tetra-n-butylphosphonium bis(2,4,4-trimethylpentyl)-phosphinat, Tri-n-butylmethylphosphonium bis(2,4,4-trimethylpentyl)-phosphinat,
Tri-n-hexyltetradecylphosphonium bis(2,4,4-trimethylpentyl)-phosphinat, Tetra-n-butylphosphonium octylhydrogenphosphonat, Bis(tetra-n-butylphosphonium)octylphosphonat, Tetra-n-butylphosphonium vinylhydrogenphosphonat, Bis(tetra-n-butylphosphonium) vinylphosphonat, Tetra-n-butylphosphonium laurylhydrogenphosphonat, Bis(tetra-n-butylphosphonium)laurylphosphonat, Tri-n-butylmethylphosphonium octylhydrogenphosphonat, Bis(tri-n-butylmethylphosphonium)octylphosphonat, Tri-n-hexyl-n-tetradecylphosphonium octylhydrogenphosphonat, Bis(tri-n-hexyl-n-tetradecylphosphonium)octylphosphonat, Tetra-n-butylphosphonium bis(2-ethylhexyl)-phosphat, Tetra-n-butylphosphonium dioctylphosphat, Tri-n-butylmethylphosphonium dibutylphosphat, Triethylmethylphosphonium dibutylphosphat, Tetraphenylphosphonium dibutylphosphat, Tetra-n-butylphosphonium di(ethylethoxylat-laurylether)-phosphat, Di-n-butyldimetylphosphonium dimethylphosphat, Dicyclohexyldimetylphosphonium dimethylphosphat, Diisobutyldimetylphosphonium dimethylphosphat, Tri-n-butylmethylphosphonium bis(2-ethylhexyl)-phosphat, Tri-n-hexyl-n-tetradecylphosphonium dioctylphosphat, Tetra-n-butylphosphonium octylhydrogenphosphat, Bis(tetra-n-butylphosphonium)octylphosphat, Tetra-n-butylphosphonium (2-ethylhexyl)-hydrogenphosphat, Bis(tetra-n-butylphosphonium) 2-ethylhexylphosphat, Tetra-n-butylphosphonium butylhydrogenphosphat, Bis(tetra-n-butylphosphonium)butylphosphat, Tetra-n-butylphosphonium laurylhydrogenphosphat, Bis(tetra-n-butylphosphonium)laurylphosphat, Tri-n-butylmethylphosphonium octylhydrogenphosphat, Bis(tri-n-butylmethylphosphonium)octylphosphat, Tri-n-hexyltetradecylphosphonium octylhydrogenphosphat, Bis(tri-n-hexyltetradecylphosphonium)octylphosphat, Tetra-n-butylphosphonium n-octoat, Tetra-n-butylphosphonium 2-ethyl-hexanoat, Tetra-n-butylphosphonium neodecanoat, Tetra-n-butylphosphonium monomethyl-adipat, Tetra-n-butylphosphonium monoisobutyl-succinat, Triphenylvinylphosphonium neodecanoat, Tetraphenylphosphonium neodecanoat, Tetra-n-butylphosphonium acetat, Tetra-n-butylphosphonium glycolat-ethoxylat-laurylether, Bis(tetra-n-butylphosphonium)cyclohexyldicarbonat, Tetra-n-butylphosphonium cyclohexylhydrogencarbonat, Bis(tetra-n-butylphosphonium)dodecandionat, Tetra-n-butylphosphonium hydrogendodecanoat, Tri-n-butylmethylphosphonium n-octoat, Tetramethylphosphonium n-octoat, Triethylmethylphosphonium n-octoat, Tri-n-butylmethylphosphonium n-octoat, Tri-n-hexyl-n-tetradecylphosphonium n-octoat und Tri-n-hexyl-n-tetradecylphosphonium decanoat.

Bevorzugt handelt es sich bei Verbindung (B2) um Tetra-n-butylphosphonium bis(2,4,4-trimethylpentyl)-phosphinat, Tri-n-butylmethylphosphonium bis(2,4,4-trimethylpentyl)-phosphinat, Tetra-n-butylphosphonium octylhydrogenphosphonat, Bis(tetra-n-butylphosphonium)octylphosphonat, Tetra-n-butylphosphonium vinylhydrogenphosphonat, Bis(tetra-n-butylphosphonium)vinylphosphonat, Tetra-n-butylphosphonium laurylhydrogenphosphonat, Bis(tetra-n-butylphosphonium)laurylphosphonat, Tri-n-butylmethylphosphonium octylhydrogenphosphonat, Bis(tri-n-butylmethylphosphonium)octylphosphonat, Tetra-n-butylphosphonium bis(2-ethylhexyl)-phosphat, Tetra-n-butylphosphonium dioctylphosphat, Tri-n-butylmethylphosphonium dibutylphosphat, Triethylmethylphosphonium dibutylphosphat, Tri-n-butylmethylphosphonium bis(2-ethylhexyl)-phosphat, Tetra-n-butylphosphonium octylhydrogenphosphat, Bis(tetra-n-butylphosphonium)octylphosphat, Tetra-n-butylphosphonium (2-ethylhexyl)-hydrogenphosphat, Bis(tetra-n-butylphosphonium)2-ethylhexylphosphat, Tetra-n-butylphosphonium butylhydrogenphosphat, Bis(tetra-n-butylphosphonium)butylphosphat, Tetra-n-butylphosphonium laurylhydrogenphosphat, Bis(tetra-n-butylphosphonium)laurylphosphat, Tri-n-butylmethylphosphonium octylhydrogenphosphat, Bis(tri-n-butylmethylphosphonium)octylphosphat, Tetra-n-butylphosphonium acetat, Tetra-n-butylphosphonium n-octoat, Tetra-n-butylphosphonium 2-ethyl-hexanoat, Tetra-n-butylphosphonium neodecanoat, Tetra-n-butylphosphonium monomethyl-adipat, Tetra-n-butylphosphonium monoisobutyl-succinat, Tetra-n-butylphosphonium glycolat-ethoxylat-laurylether, Bis(tetra-n-butylphosphonium)cyclohexyldicarbonat, Tetra-n-butylphosphonium cyclohexylhydrogencarbonat, Bis(tetra-n-butylphosphonium)dodecandionat, Tetra-n-butylphosphonium hydrogendodecanoat, Tri-n butylmethylphosphonium n-octoat, Tetramethylphosphonium n-octoat, Triethylmethylphosphonium n-octoat und Tri-n-butylmethylphosphonium n-octoat,
besonders bevorzugt um
Tetra-n-butylphosphonium bis(2,4,4-trimethylpentyl)-phosphinat, Tri-n-butylmethylphosphonium bis(2,4,4-trimethylpentyl)-phosphinat, Tetra-n-butylphosphonium octylhydrogenphosphonat, Bis(tetra-n-butylphosphonium)octylphosphonat, Tri-n-butylmethylphosphonium octylhydrogenphosphonat, Bis(tri-n-butylmethylphosphonium)octylphosphonat, Tetra-n-butylphosphonium bis(2-ethylhexyl)-phosphat, Tetra-n-butylphosphonium dioctylphosphat, Tri-n-butylmethylphosphonium dibutylphosphat, Triethylmethylphosphonium dibutylphosphat, Tri-n-butylmethylphosphonium bis(2-ethylhexyl)-phosphat, Tetra-n-butylphosphonium octylhydrogenphosphat, Bis(tetra-n-butylphosphonium)octylphosphat, Tetra-n-butylphosphonium (2-ethylhexyl)-hydrogenphosphat, Bis(tetra-n-butylphosphonium)2-ethylhexylphosphat, Tetra-n-butylphosphonium butylhydrogenphosphat, Bis(tetra-n-butylphosphonium)butylphosphat, Tetra-n-butylphosphonium laurylhydrogenphosphat, Bis(tetra-n-butylphosphonium)laurylphosphat, Tri-n-butylmethylphosphonium octylhydrogenphosphat, Bis(tri-n-butylmethylphosphonium)octylphosphat, Tetra-n-butylphosphonium n-octoat, Tetra-n-butylphosphonium 2-ethyl-hexanoat, Tetra-n-butylphosphonium neodecanoat, Tetra-n-butylphosphonium glycolat-ethoxylat-laurylether, Bis(tetra-n-butylphosphonium)cyclohexyldicarbonat, Tetra-n-butylphosphonium cyclohexylhydrogencarbonat, Bis(tetra-n-butylphosphonium)dodecandionat, Tetra-n-butylphosphonium hydrogendodecanoat, Tri-n butylmethylphosphonium n-octoat, Tetramethylphosphonium n-octoat, Triethylmethylphosphonium n-octoat und Tri-n-butylmethylphosphonium n-octoat,
insbesondere um
Tetra-n-butylphosphonium bis(2,4,4-trimethylpentyl)-phosphinat, Tri-n-butylmethylphosphonium bis(2,4,4-trimethylpentyl)-phosphinat, Tetra-n-butylphosphonium acetat, Tetra-n-butylphosphonium n-octoat,
Tetra-n-butylphosphonium 2-ethyl-hexanoat, Tetra-n-butylphosphonium neodecanoat, Tetra-n-butylphosphonium glycolat-ethoxylat-laurylether, Tri-n butylmethylphosphonium n-octoat, Tetramethylphosphonium n-octoat, Triethylmethylphosphonium n-octoat und Tri-n-butylmethylphosphonium n-octoat.

Die erfindungsgemäß eingesetzte Komponente (B2) sind handelsübliche Produkte bzw. nach in der Chemie gängigen Methoden herstellbar.

Die erfindungsgemäßen Massen enthalten Komponente (B) in Mengen von bevorzugt 0,001 bis 10 Gewichtsteilen, besonders bevorzugt 0,01 bis 5 Gewichtsteilen, insbesondere 0,05 bis 2 Gewichtsteilen, jeweils bezogen auf 100 Gewichtsteile Komponente (A).

Bevorzugt handelt es sich bei der phosphorhaltigen Säure (C1) um solche der Formel (III) mit r gleich 1 oder 2.

Beispiele für die erfindungsgemäß eingesetzten phosphorhaltigen Säuren (C1) sind Mono- und Diester der Phosphorsäure, wie n-Octylphosphat, (2-Ethylhexyl)phosphat, Di-n-octylphosphat, Din-butylphosphat, Bis(2-Ethylhexyl)phosphat, Di-isooctylphosphat, Phosphorsäure-dihexadecylester; Phosphonsäuren und Monoester der Phosphonsäure, wie n-Octylphosphonsäure, Octylphosphonsäure-monoethylester, (2,4,4-trimethylpentyl)-phosphonsäure, Dodecylphosphonsäure; sowie Phosphinsäuren, wie Bis(2-Ethylhexyl)phosphinsäure, Bis(2,4,4-Trimethylpentyl)phosphinsäure, Di-n-octylphosphinsäure und Didodecylphosphinsäure.

Es handelt sich bei Verbindung (C1) um Verbindungen der Formel (III) mit q=1 und r=1 oder 2 sowie mit q=2 und r=1, ganz besonders bevorzugt um Verbindungen der Formel (III) mit q=2 und r=1.

Bevorzugt handelt es sich bei der Carbonsäure (C2) um Verbindungen mit einem Schmelzpunkt bei 1000 hPa von unter 100°C, besonders bevorzugt um Verbindungen mit einem Schmelzpunkt bei 1000 hPa von unter 100°C und einer Molmasse von über 80 g/mol, insbesondere um Verbindungen mit einem Schmelzpunkt bei 1000 hPa von unter 80°C und einer Molmasse von über 120 bis 1200 g/mol.

Beispiele für die erfindungsgemäß eingesetzten Carbonsäuren (C2) sind gesättigte Carbonsäuren, wie Octansäure, Neodecansäure, 2-Ethylhexylsäure, 4-Cyclohexylbutansäure, Dodecylsäure, Palmitinsäure und Stearinsäure; ungesättigte Carbonsäuren, wie Ölsäure, Linolsäure, Linolensäure; aromatische Carbonsäuren, wie Benzoesäure; Hydroxycarbonsäuren sowie deren Ether, wie Glykolsäureether, Rizinolsäure, Salicylsäure, Glykolsäure-ethoxylat-laurylether mit durchschnittlichen Molmassen von 360 g/mol bis 1000 g/mol, Glykolsäure-ethoxylat-4-tert.-butylphenylether mit durchschnittlichen Molmassen von 360 g/mol bis 1000 g/mol, Glykolsäure-ethoxylat-nonylphenylether mit durchschnittlichen Molmassen von 400 g/mol bis 1000 g/mol, Glykolsäure-ethoxylat-oleylether mit durchschnittlichen Molmassen von 4000 g/mol bis 1000 g/mol; gesättigte und ungesättigte Dicarbonsäuren, wie Oxalsäure, Malonsäure, Bernsteinsäure, Glutarsäure, Adipinsäure, Pimelinsäure, Korksäure, Nonandisäure, Weinsäure, Apfelsäure, Allylbernsteinsäure, Oxobersteinsäure, 2-Oxoglutarsäure, Cyclohexan-1,2-, -1,3- und -1,4-dicarbonsäure, Maleinsäure, Fumarsäure, Phthalsäure, Isophthalsäure, Terephthalsäuren, Glutaminsäure, Asparaginsäure, Dimersäure mit einer durchschnittlichen Molmasse von 570 g/mol, hydrierte Dimersäure mit einer durchschnittlichen Molmasse von 570 g/mol; Monoester von Dicarbonsäuren wie Oxalsäuremonoethylester, Malonsäuremonomethylester, Bernsteinsäuremonomethylester, Glutarsäuremonomethylester, Cyclohexan-1,2-, -1,3- und -1,4-dicarbonsäure-monomethylester, Phthalsäuremonomethylester, Phthalsäure-mo-no-[2-(methacryloyloxy)-ethylester]; sowie Tricarbonsäuren wie Aconitsäure, Zitronensäure, Trimersäure und hydrierte Trimersäure.

Bevorzugt handelt es sich bei Verbindung (C) um Verbindungen der Formel (III) mit q=2 und r=1 und um (C2).

Die erfindungsgemäßen Massen enthalten Komponente (C) in Mengen von bevorzugt 0,1 bis 20 Gewichtsteilen, besonders bevorzugt 0,5 bis 15 Gewichtsteilen, insbesondere 1,0 bis 10 Gewichtsteilen, jeweils bezogen auf 100 Gewichtsteile Komponente (A).

Die erfindungsgemäß eingesetzte Komponente (C) sind handelsübliche Produkte bzw. nach in der Chemie gängigen Methoden herstellbar.

Bei Rest X handelt es sich bevorzugt um Reste R³R⁴N-, R⁵O-, R^{5'}S-, (R^{5''}O)₂P(=O)-, O=C=N-, R⁶C(=O)-, R^{6'}O-C(=O)-, wobei R³ und R⁴ jeweils unabhängig voneinander Wasserstoffatom oder einwertige, gegebenenfalls substituierte Kohlenwasserstoffreste bedeuten, wobei die Gruppierung R³R⁴N- auch zu einem Ring verbunden sein kann, der auch noch andere Elemente anstelle der Kohlenstoffatome enthalten kann, R⁵ eine für Rest R angegebene Bedeutung hat oder einen Rest CH₃(C=CH₂)-(C=O)- oder CH₃-O-(C=O)-bedeutet, R^{5'}, R^{5''}, R⁶ und R^{6'} jeweils unabhängig voneinander gleich oder verschieden sein können und eine für Rest R angegebene Bedeutung haben.

Beispiele für Reste R³ und R⁴ sind Wasserstoffatom und die für R oben angegebenen Beispiele.

Beispiele für Reste R⁵, R^{5'}, R^{5''}, R⁶ und R^{6'} sind jeweils unabhängig voneinander die für R oben angegebenen Beispiele.

Bevorzugt handelt es sich bei Rest R³ um Methyl-, Ethyl-, Propyl-, Butyl-, Hexyl-, Phenyl-, Cyclohexyl-, 2-Aminoethyl-, N-(2-Aminoethyl)aminoethyl-, 6-Aminohexyl- oder Octylrest oder um Wasserstoffatom oder den Rest CH₃-O-(C=O)-.

Bevorzugt handelt es sich bei Rest R⁴ um Methyl-, Ethyl-, Propyl-, Butyl-, Hexyl- oder Octylrest oder um Wasserstoffatom.

Besonders bevorzugt sind die beiden Reste R³ und R⁴ zu einem Ring verbunden sind, der insbesondere noch Sauerstoff oder Stickstoff enthält.

Beispiele für Rest X gleich R³R⁴N, bei denen die Reste R³ und R⁴ cyclisch miteinander verbunden sind, sind über ein Stickstoffatom angebundene Piperazin-, Morpholin- oder Hexahydropyridinreste aber auch aromatische Reste, wie z.B. Pyrrolreste.

Bevorzugt handelt es sich bei Rest R⁵ um den Rest CH₃(C=CH₂)-(C=O)- und den Rest CH₃-O-(C=O)-.

Bevorzugt handelt es sich bei Rest R^{5'} um Methyl-, Ethyl-, Propyl-, Butyl-, Hexyl- oder Octylrest.

Bevorzugt handelt es sich bei Rest R^{5''} um Methyl-, Ethyl-, Propyl-, Butyl-, Hexyl- oder Octylrest.

Bevorzugt handelt es sich bei Rest R⁶ um Methyl-, Ethyl-, Propyl-, Butyl-, Hexyl- oder Octylrest.

Bevorzugt handelt es sich bei Rest R^{6'} um Methyl-, Ethyl-, Propyl-, Butyl-, Hexyl- oder Octylrest.

Beispiele für Reste X sind der N-Cyclohexylamino-, der N-Phenylamino-, der Diethylamino-, der N-(2-Aminoethyl)amino-, der N-(2-Aminohexyl)amino-, der N-(N'-(2-Aminoethyl)2-aminoethyl)-amino-, der Methacryloxy-, der Acetoxy-, der Isocyanato-, der N-Morpholino-, der N-Pyrrolidino-, der N-Piperidino- und der O-Methylcarbamato-Rest.

Besonders bevorzugte Reste X sind der N-Cyclohexylamino-, der Diethylamino-, der N-(2-Aminoethyl)amino-, der N-(2-Aminohexyl)amino-, der Methacryloxy-, der Acetoxy-, der N-Morpholino-, der N-Pyrrolidino-, der N-Piperidino und der O-Methylcarbamato-Rest und ganz besonders bevorzugt der N-Cyclohexylamino-, der Diethylamino-, der N-(2-Aminohexyl)amino-, der Methacryloxy-, der Acetoxy-, der N-Morpholino- und der O-Methylcarbamato-Rest.

Beispiele, bevorzugte und besonders bevorzugte Reste für R' sind die für Rest R oben angegebenen Reste.

Beispiele für R^{1'} sind die für Rest R¹ oben angegebenen Reste.

Bevorzugt handelt es sich bei Rest R^{1'} um Wasserstoffatom und Kohlenwasserstoffreste mit 1 bis 20 Kohlenstoffatomen, insbesondere um Wasserstoffatom und Methylrest.

Beispiele für Reste Y sind alle bisher bekannten hydrolysierbaren Reste, wie z.B. Halogenatome, Organyloxyreste, Si-N-gebundene Aminreste, Amidreste, Oximreste, Acyloxyreste und Aminoxyreste.

Bevorzugt handelt es sich bei Rest Y um Organyloxyreste, wie Methoxy-, Ethoxy-, n-Propoxy-, i-Propoxy-, n-Butoxy-, i-Butoxy-, s-Butoxy-, tert-Butoxy- und 2-Methoxyethoxyrest; Amidoreste, wie N-Methylacetamido- und Benzamidorest; und Enoxyreste, wie der 2-Propenoxyrest, besonders bevorzugt um den Methoxy-, Ethoxy-, n-Propoxy-, i-Propoxy-, 2-Methoxyethoxy-, Benzamido- und 2-Propenoxyrest, insbesondere um den Methoxy- oder Ethoxyrest.

Obwohl durch Formel (II) nicht ausgedrückt, können die erfindungsgemäß eingesetzten Silane (D) einen gewissen Anteil an Silanolgruppen aufweisen, also Y gleich Hydroxygruppe, was jedoch nicht bevorzugt ist. Diese Silanolgruppen entstehen im Allgemeinen durch den in der Praxis häufig unvermeidlichen Kontakt mit Luftfeuchtigkeit während der Herstellung und Lagerung der Organosiliciumverbindungen der Formel (II). Erfindungsgemäß eingesetzte Silane (D) enthalten Silanolgruppen in Mengen bis maximal 5 Gew.-%, bevorzugt bis maximal 3 Gew.-%, besonders bevorzugt bis maximal 1,0 Gew.-%.

Beispiele für die erfindungsgemäß eingesetzte Organosiliciumverbindung (D) sind H₂N-CH₂-Si(OCH₃)₃, H₂N-CH₂-Si(OCH₂CH₃)₃, (CH₃-(CH₂)₃)₂N-CH₂-Si(OCH₂CH₃)₃, (H₃C-CH₂)₂N-CH₂-Si(OCH₂CH₃)₃, (CH₃-(CH₂)₃)₂N-CH₂-Si(OCH₃)₃, (H₃C-CH₂)₂N-CH₂-Si(OCH₃)₃, ((CH₃)₂CH)₂N-CH₂-Si(OCH₂CH₃)₃, ((CH₃)₂CH)₂N-CH₂-Si(OCH₃)₃, (CH₃CH₂(CH₃)CH)₂N-CH₂-Si(OCH₂CH₃)₃, (CH₃CH₂(CH₃)CH)₂N-CH₂-Si(OCH₃)₃, C₆H₅(CH₃)N-CH₂-Si(OCH₂CH₃)₃, C₆H₅(CH₃)N-CH₂-Si(OCH₃)₃, C₆H₁₁(CH₃)N-CH₂-Si(OCH₂CH₃)₃, C₆H₁₁(CH₃)N-CH₂-Si(OCH₃)₃, (CH₃-(CH₂)₃)HN-CH₂-Si(OCH₂CH₃)₃, (H₃C-CH₂)HN-CH₂-Si(OCH₂CH₃)₃, (CH₃-(CH₂)₃)HN-CH₂-Si(OCH₃)₃, (H₃C-CH₂)HN-CH₂-Si(OCH₃)₃, ((CH₃)₂CH)HN-CH₂-Si(OCH₂CH₃)₃, ((CH₃)₂CH)HN-CH₂-Si(OCH₃)₃, (CH₃CH₂(CH₃)CH)HN-CH₂-Si(OCH₂CH₃)₃, (CH₃CH₂(CH₃)CH)HN-CH₂-Si(OCH₃)₃, C₆H₅HN-CH₂-Si(OCH₂CH₃)₃, C₆H₅HN-CH₂-Si(OCH₃)₃, C₆H₁₁HN-CH₂-Si(OCH₂CH₃)₃, C₆H₁₁HN-CH₂-Si(OCH₃)₃, cyclo(O(CH₂-CH₂)₂N)-CH₂-Si(OCH₂CH₃)₃, cyclo(O(CH₂-CH₂)₂N)-CH₂-Si(OCH₃)₃, cyclo(HN(CH₂-CH₂)₂N)-CH₂-Si(OCH₂CH₃)₃, cyclo(HN(CH₂-CH₂)₂N)-CH₂-Si(OCH₃)₃, H₂N-CH₂-SiCH₃(OCH₃)₂, H₂N-CH₂-SiCH₃(OCH₂CH₃)₂, (CH₃-(CH₂)₃)₂N-CH₂-SiCH₃(OCH₂CH₃)₂, (H₃C-CH₂)₂N-CH₂-SiCH₃(OCH₂CH₃)₂, (CH₃-(CH₂)₃)₂N-CH₂-SiCH₃(OCH₃)₂, (H₃C-CH₂)₂N-CH₂-SiCH₃(OCH₃)₂, ((CH₃)₂CH)₂N-CH₂-SiCH₃(OCH₂CH₃)₂, ((CH₃)₂CH)₂N-CH₂-SiCH₃(OCH₃)₂, (CH₃CH₂(CH₃)CH)₂N-CH₂-SiCH₃(OCH₂CH₃)₂, (CH₃CH₂(CH₃)CH)₂N-CH₂-SiCH₃(OCH₃)₂, C₆H₅(CH₃)N-CH₂-SiCH₃(OCH₂CH₃)₂, C₆H₅(CH₃)N-CH₂-SiCH₃(OCH₃)₂, C₆H₁₁(CH₃)N-CH₂-SiCH₃(OCH₂CH₃)₂, C₆H₁₁(CH₃)N-CH₂-SiCH₃(OCH₃)₂, (CH₃-(CH₂)₃)HN-CH₂-SiCH₃(OCH₂CH₃)₂, (H₃C-CH₂)HN-CH₂-SiCH₃(OCH₂CH₃)₂, (CH₃-(CH₂)₃)HN-CH₂-SiCH₃(OCH₃)₂, (H₃C-CH₂)HN-CH₂-SiCH₃(OCH₃)₂, ((CH₃)₂CH)HN-CH₂-SiCH₃(OCH₂CH₃)₂, ((CH₃)₂CH)HN-CH₂-SiCH₃(OCH₃)₂, (CH₃CH₂(CH₃)CH)HN-CH₂-SiCH₃(OCH₂CH₃)₂, (CH₃CH₂(CH₃)CH)HN-CH₂-SiCH₃(OCH₃)₂, C₆H₅HN-CH₂-SiCH₃(OCH₂CH₃)₂, C₆H₅HN-CH₂-SiCH₃(OCH₃)₂, C₆H₁₁HN-CH₂-SiCH₃(OCH₂CH₃)₂, C₆H₁₁HN-CH₂-SiCH₃(OCH₃)₂, cyclo(O(CH₂-CH₂)₂N)-CH₂-SiCH₃(OCH₂CH₃)₂, cyclo(O(CH₂-CH₂)₂N)-CH₂-SiCH₃(OCH₃)₂, cyclo(HN(CH₂-CH₂)₂N)-CH₂-SiCH₃(OCH₂CH₃)₂, cyclo(HN(CH₂-CH₂)₂N)-CH₂-SiCH₃(OCH₃)₂, (H₂N-CH₂-(CH₂)₅)HN-CH₂-Si(OCH₂CH₃)₃, (H₂N-H₂C-CH₂)HN-CH₂-Si(OCH₂CH₃)₃, (H₂N-CH₂-(CH₂)₅)HN-CH₂-Si(OCH₃)₃, (H₂N-H₂C-CH₂)HN-CH₂-Si(OCH₃)₃, H₃C-C(=O)O-CH₂-Si(OCH₂CH₃)₃, H₃C-C(=O)O-CH₂-Si(OCH₃)₃, H₂C=C(CH₃)-C(=O)O-CH₂-Si(OCH₂CH₃)₃, H₂C=C(CH₃)C(=O)O-CH₂-Si(OCH₃)₃, H₃C-O-C(=O)NH-CH₂-Si(OCH₂CH₃)₃, (H₂N-CH₂-(CH₂)₅)HN-CH₂-SiCH₃(OCH₂CH₃)₂, H₃C-O-C(=O)NH-CH₂-Si(OCH₃)₃, (H₂N-H₂C-CH₂)HN-CH₂-SiCH₃(OCH₂CH₃)₂, (H₂N-CH₂-(CH₂)₅)HN-CH₂-SiCH₃(OCH₃)₂, (H₂N-H₂C-CH₂)HN-CH₂-SiCH₃(OCH₃)₂, H₃C-C(=O)O-CH₂-SiCH₃(OCH₂CH₃)₂, H₃C-C(=O)O-CH₂-SiCH₃(OCH₃)₂, H₂C=C(CH₃)-C (=O)O-CH₂-SiCH₃(OCH₂CH₃)₂, H₂C=C(CH₃)C(=O)O-CH₂-SiCH₃(OCH₃)₂, H₃C-O-C(=O)NH-CH₂-SiCH₃(OCH₂CH₃)₂, H₃C-O-C(=O)NH-CH₂-SiCH₃(OCH₃)₂, cyclo(CH₂-O-CH)-CH₂-O-CH₂-Si(OCH₃)₃, cyclo(CH₂-O-CH)-CH₂-O-CH₂-Si(OCH₂CH₃)₃, cyclo(CH₂-O-CH)-CH₂-O-CH₂-SiCH₃(OCH₂CH₃)₂, cyclo(CH₂-O-CH)-CH₂-O-CH₂-SiCH₃(OCH₃)₂, (CH₃CH₂O)₂-P(=O)-CH₂-Si(OCH₃)₃, cyclo(O(CH₂-CH₂)₂N)-CH(CH₃)SiCH₃(OCH₂CH₃)₂, cyclo(O(CH₂-CH₂)₂N)-CH(CH₃)-SiCH₃(OCH₃)₂, cyclo(O(CH₂-CH₂)₂N)-CH(CH₃)-Si(OCH₂CH₃)₃, cyclo(O(CH₂-CH₂)₂N)-CH(CH₃)-Si(OCH₃)₃, cyclo(CH₂-CH₂-CH₂-C(=O)N)-CH(CH₃)-SiCH₃(OCH₂CH₃)₂, cyclo(CH₂-CH₂-CH₂-C(=O)N)-CH(CH₃)-SiCH₃(OCH₃)₂, cyclo(CH₂-CH₂-CH₂-C(=O)N)-CH(CH₃)-Si(OCH₂CH₃)₃ und cyclo(CH₂-CH₂-CH₂-C(=O)N)-CH(CH₃)-Si(OCH₃)₃ sowie deren Teilhydrolysate.

Bevorzugt handelt es sich bei den erfindungsgemäß eingesetzten Organosiliciumverbindung (D) um (CH₃-(CH₂)₃)₂N-CH₂-Si(OCH₂CH₃)₃, (H₃C-CH₂)₂N-CH₂-Si(OCH₂CH₃)₃, (CH₃-(CH₂)₃)₂N-CH₂-Si(OCH₃)₃, (H₃C-CH₂)₂N-CH₂-Si(OCH₃)₃, (CH₃CH₂(CH₃)CH)₂N-CH₂-Si(OCH₂CH₃)₃, (CH₃CH₂(CH₃)CH)₂N-CH₂-Si(OCH₃)₃, C₆H₅(CH₃)N-CH₂-Si(OCH₂CH₃)₃, C₆H₅(CH₃)N-CH₂-Si(OCH₃)₃, (CH₃-(CH₂)₃)HN-CH₂-Si(OCH₂CH₃)₃, (H₃C-CH₂)HN-CH₂-Si(OCH₂CH₃)₃, (CH₃-(CH₂)₃)HN-CH₂-Si(OCH₃)₃, (H₃C-CH₂)HN-CH₂-Si(OCH₃)₃, ((CH₃)₂CH)HN-CH₂-Si(OCH₂CH₃)₃, ((CH₃)₂CH)HN-CH₂-Si(OCH₃)₃, (CH₃CH₂(CH₃)CH)HN-CH₂-Si(OCH₂CH₃)₃, (CH₃CH₂(CH₃)CH)HN-CH₂-Si(OCH₃)₃, C₆H₅HN-CH₂-Si(OCH₂CH₃)₃, C₆H₅HN-CH₂-Si(OCH₃)₃, C₆H₁₁HN-CH₂-Si(OCH₂CH₃)₃, C₆H₁₁HN-CH₂-Si(OCH₃)₃, cyclo(O(CH₂-CH₂)₂N)-CH₂-Si(OCH₂CH₃)₃, cyclo(O(CH₂-CH₂)₂N)-CH₂-Si(OCH₃)₃, (H₂N-CH₂-(CH₂)₅)HN-CH₂-Si(OCH₂CH₃)₃, (H₂N-CH₂-(CH₂)₅)HN-CH₂-Si(OCH₃)₃, (CH₃-(CH₂)₃)₂N-CH₂-SiCH₃(OCH₂CH₃)₂, (H₃C-CH₂)₂N-CH₂-SiCH₃(OCH₂CH₃)₂, (H₃C-CH₂)₂N-CH₂-SiCH₃(OCH₃)₂, (CH₃CH₂(CH₃)CH)₂N-CH₂-SiCH₃(OCH₂CH₃)₂, (CH₃CH₂(CH₃)CH)₂N-CH₂-SiCH₃(OCH₃)₂, C₆H₅HN-CH₂-SiCH₃(OCH₂CH₃)₂, C₆H₅HN-CH₂-SiCH₃(OCH₃)₂, C₆H₁₁HN-CH₂-SiCH₃(OCH₂CH₃)₂, C₆H₁₁HN-CH₂-SiCH₃(OCH₃)₂, cyclo(O(CH₂-CH₂)₂N)-CH₂-SiCH₃(OCH₂CH₃)₂, cyclo(O(CH₂-CH₂)₂N)-CH₂-SiCH₃(OCH₃)₂ , H₃C-C(=O)O-CH₂-Si(OCH₂CH₃)₃, H₃C-C(=O)O-CH₂-Si(OCH₃)₃, H₂C=C(CH₃)-C(=O)O-CH₂-Si(OCH₂CH₃)₃, H₂C=C(CH₃)C(=O)O-CH₂-Si(OCH₃)₃, H₃C-O-C(=O)NH-CH₂-Si(OCH₂CH₃)₃, H₃C-O-C(=O)NH-CH₂-Si(OCH₃)₃, H₃C-C(=O)O-CH₂-SiCH₃(OCH₂CH₃)₂, H₃C-C(=O)O-CH₂-SiCH₃(OCH₃)₂, H₂C=C(CH₃)-C(=O)O-CH₂-SiCH₃(OCH₂CH₃)₂, H₂C=C(CH₃)C (=O)O-CH₂-SiCH₃ (OCH₃)₂, H₃C-O-C(=O)NH-CH₂-SiCH₃(OCH₂CH₃)₂ und H₃C-O-C(=O)NH-CH₂-SiCH₃(OCH₃)₂ sowie deren Teilhydrolysate, wobei (H₃C-CH₂)₂N-CH₂-Si(OCH₂CH₃)₃, (H₃C-CH₂)₂N-CH₂-Si(OCH₃)₃, C₆H₅(CH₃)N-CH₂-Si(OCH₃)₃, C₆H₁₁HN-CH₂-Si(OCH₂CH₃)₃, C₆H₁₁HN-CH₂-Si(OCH₃)₃, cyclo(O(CH₂-CH₂)₂N)-CH₂-Si(OCH₂CH₃)₃, cyclo(O(CH₂-CH₂)₂N)-CH₂-Si(OCH₃)₃, C₆H₅HN-CH₂-SiCH₃(OCH₃)₂, C₆H₁₁HN-CH₂-SiCH₃(OCH₂CH₃)₂, C₆H₁₁HN-CH₂-SiCH₃(OCH₃)₂, cyclo(O(CH₂-CH₂)₂N)-CH₂-SiCH₃(OCH₂CH₃)₂, cyclo(O(CH₂-CH₂)₂N)-CH₂-SiCH₃(OCH₃)₂, H₃C-C(=O)O-CH₂-Si(OCH₂CH₃)₃, H₂C=C(CH₃)-C(=O)O-CH₂-Si(OCH₂CH₃)₃, H₂C=C(CH₃)C(=O)O-CH₂-Si(OCH₃)₃, H₃C-O-C(=O)NH-CH₂-Si(OCH₂CH₃)₃, H₃C-O-C(=O)NH-CH₂-Si(OCH₃)₃, H₂C=C(CH₃)-C(=O)O-CH₂-SiCH₃(OCH₂CH₃)₂, H₂C=C(CH₃)C(=O)O-CH₂-SiCH₃(OCH₃)₂, H₃C-O-C(=O)NH-CH₂-SiCH₃(OCH₂CH₃)₂ und H₃C-O-C(=O)NH-CH₂-SiCH₃(OCH₃)₂ sowie deren Teilhydrolysate besonders bevorzugt sind.

Bei den Organosiliciumverbindungen (D) handelt es sich um handelsübliche Produkte bzw. können nach in der Siliciumchemie gängigen Methoden hergestellt werden.

Die erfindungsgemäßen Massen enthalten Organosiliciumverbindung (D) in Mengen von bevorzugt 0,01 bis 20 Gewichtsteilen, besonders bevorzugt 0,5 bis 10 Gewichtsteilen, insbesondere 1,0 bis 5,0 Gewichtsteilen, jeweils bezogen auf 100 Gewichtsteile Komponente (A).

Des Weiteren können die erfindungsgemäßen Massen alle weiteren Stoffe enthalten, die auch bisher in vernetzbaren Massen eingesetzt wurden, wie z.B. weitere Vernetzer (E), Weichmacher (F), Füllstoffe (G), Haftvermittler (H) und Additive (I), wobei (E), (F) und (H) verschieden sind zu den Komponenten (A) bis (D).

Bei den in den erfindungsgemäßen Massen gegebenenfalls eingesetzten Vernetzern (E) kann es sich um beliebige, bisher bekannte Vernetzer mit mindestens zwei kondensationsfähigen Resten handeln, wie beispielsweise Silane mit mindestens zwei Organyloxygruppen, die von Komponente (B12) und Komponente (D) verschieden sind.

Besonders bevorzugt handelt es sich bei den in den erfindungsgemäßen Massen gegebenenfalls eingesetzten Vernetzern (E) um Silanvernetzer, wie Tetramethoxysilan, Tetraethoxysilan, Tetrapropoxysilan, Tetrabutoxysilan, Methyltrimethoxysilan, Dimethyldimethoxysilan, Methyltriethoxysilan, Methylvinyldimethoxysilan, Vinyltrimethoxysilan, Butyltrimethoxysilan, Vinyltriethoxysilan, Phenyltrimethoxysilan, Diphenyldimethoxysilan, Phenyltriethoxysilan, 3-Cyanopropyltrimethoxysilan, 3-Cyanopropyltriethoxysilan, 3-(Glycidoxy)propyltriethoxysilan, 1,2-Bis-(trimethoxysilyl)ethan, 1,2-Bis(triethoxysilyl)ethan, Methyltriacetoxysilan, Ethyltriacetoxysilan, Propyltriacetoxysilan, Di-t-butoxydiacetoxysilan, Methyltris(methylethylketoximo)silan und Vinyltris(methylethylketoximo)silan, Tetra-kis-(methyl-ethylketoximo)silan, Bis(N-Methylbenzamido)ethoxy-methylsilan, Methyltris-(propenyloxy)silan, Vinyltris-(propenyloxy)silan sowie deren Teilhydrolysate, die ggf. auch durch Cohydrolyse, wie z.B. durch Cohydrolyse von Methyltrimethoxysilan und Dimethyldimethoxysilan, dargestellt werden können.

Die in den erfindungsgemäßen Massen gegebenenfalls eingesetzten Vernetzer (E) sind handelsübliche Produkte bzw. können nach in der Siliciumchemie bekannten Verfahren hergestellt werden.

Falls die erfindungsgemäßen Massen Vernetzer (E) enthalten, handelt es sich um Mengen von vorzugsweise 0,1 bis 10 Gewichtsteilen, besonders bevorzugt 0,5 bis 3 Gewichtsteilen, jeweils bezogen auf 100 Gewichtsteile Komponente (A). Bevorzugt enthalten die erfindungsgemäßen Massen keinen zusätzlichen Vernetzer (E).

Beispiele für Weichmacher (F) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, sowie hochsiedende Kohlenwasserstoffe, wie z.B. Paraffinöle, Dialkylbenzole, Dialkylnaphthaline oder Mineralöle bestehend aus naphthenischen und paraffinischen Einheiten, Polyglykole, insbesondere Polypropylenglykole, die gegebenenfalls substituiert sein können, hochsiedende Ester, wie z.B Phthalate, Zitronensäureester oder Diester von Dicarbonsäuren, flüssige Polyester, Polyacrylate oder Polymethacrylate sowie Alkylsulfonsäureester.

Falls die erfindungsgemäßen Massen Weichmacher (F) enthalten, handelt es sich um Mengen von vorzugsweise 1 bis 300 Gewichtsteilen, besonders bevorzugt 10 bis 200 Gewichtsteilen, insbesondere 20 bis 100 Gewichtsteilen, jeweils bezogen auf 100 Gewichtsteile Bestandteil (A). Die erfindungsgemäßen Massen enthalten bevorzugt Weichmacher (F).

Beispiele für Füllstoffe (G) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; hohlkugelförmiger Füllstoffe, wie keramische Microkugel, wie z.B. solche erhältlich unter der Handelsbezeichnung Zeeospheres™, elastische Kunststoffkugeln, wie etwa solche erhältlich unter der Handelsbezeichnung EXPANCEL®, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (G) eingesetzt werden, handelt es sich bevorzugt um hydrophobe pyrogene Kieselsäure und gefälltes oder gemahlenes Calciumcarbonat.

Falls die erfindungsgemäßen Massen Füllstoffe (G) enthalten, handelt es sich um Mengen von vorzugsweise 1 bis 300 Gewichtsteilen, besonders bevorzugt 1 bis 200 Gewichtsteilen, insbesondere 5 bis 200 Gewichtsteilen, jeweils bezogen auf 100 Gewichtsteile Bestandteil (A). Die erfindungsgemäßen Massen enthalten bevorzugt Füllstoffe (G).

Beispiele für die in den erfindungsgemäßen Massen eingesetzten Haftvermittler (H) sind Silane und Organopolysiloxane mit funktionellen Gruppen, wie beispielsweise solche mit Glycidoxypropyl-, Amino- oder Methacryloxypropylresten sowie Tetraalkoxysilane und T- oder Q-Gruppen enthaltende Siloxane, die ggf. Alkoxygruppen aufweisen können. Falls jedoch bereits eine andere Komponente, wie etwa Komponente (A), (B12), (D) oder Vernetzer (E), die genannten funktionellen Gruppen aufweist, kann auf einen Zusatz von Haftvermittler verzichtet werden.

Falls die erfindungsgemäßen Massen Haftvermittler (H) enthalten, handelt es sich um Mengen von vorzugsweise 0,1 bis 50 Gewichtsteilen, besonders bevorzugt 0,5 bis 20 Gewichtsteilen, insbesondere 1 bis 10 Gewichtsteilen, jeweils bezogen auf 100 Gewichtsteile Bestandteil (A). Die erfindungsgemäßen Massen enthalten bevorzugt Haftvermittler (H).

Beispiele für Additive (I) sind Pigmente, Farbstoffe, Riechstoffe, Oxidationsinhibitoren, wie sterisch gehinderte Phenole, z.B. 2,6-Ditertbutyl-4-methyl phenol (BHT), 4,6-(dodecylthiomethyl)-o-cresol, Pentaerythrittetrakis-(3-(3,5-ditertbutyl-4-hydroxyphenyl)propionat oder C7-C9-verzweigtes Alkyl-[3-(3,5-di-tert-butyl-4-hydroxyphenyl)]propionat oder Vitamin E, Fungizide, wie z.B. Isothiazolinone, insbesondere n-2-Octyl-2H-iso-thizolin-3-on, n-Butyl-1,2-benzisothiazolin-3-on oder 4,5-Dichlor-2-octyl-3(2H)-isothiazolin-3-on, 3-Iod-2-propinylbutylcarbamat, Thiabendazol, Carbendazim, 3-Benzo[b]thien-2-yl-5,6-dihydro-1,4,2-oxathiazin,4-oxide, Benzthiophen-2-cyclohexylcarboxamid-S,S-dioxid, 2-Thiazol-4-yl-1H-benzoimidazol, silberhaltige Trägerstoffe oder Nano-Silber, Triazolderivate, wie Tebuconazol oder Kombinationen von zwei oder drei Wirkstoffen, Mittel zur Beeinflussung der elektrischen Eigenschaften, wie leitfähiger Ruß, flammabweisend machende Mittel, Lichtschutzmittel, wie UV-Absorber, z.B. Benzotriazolderivate, wie z.B. 2-(2H-benzotriazol-2-yl)-4,6-bis(1-methyl-1-phenylethyl)phenol, 2,4-di-tert.butyl-6(5-chlorobenzotriazo-2-yl) phenol, 2-(2H-benzotriazol-2-yl)-4,6-ditertpentyl phenol, 2-(2H-benzotriazol-2-yl)4-methyl-6-dodecylphenol, 2-(2H-benzotriazol-2-yl)4alkyl-PEG-6-t-butylphenol, Nanometalloxide z.B. des Titans oder Zinks, Cyanoacrylate, z.B. Uvinul® 3030, Uvinul® 3035 oder Uvinul® 3039 der BASF AG, Deutschland, Benzophenone, wie z.B. Uvinul® 3008, wie Radikalfänger, z.B. sterisch gehinderte Amine (HALS, z.B. Tinuvin® 622, Tinuvin® 765, Tinuvin® 770 oder Tinuvin® 123 der Fa. Ciba, Schweiz oder Uvinul® 4050H, Uvinul® 4077H, Uvinul® 4092H, Uvinul® 5050H, oder Uvinul® 5062H der BASF AG, Deutschland), Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren, wie Triisodecylphosphit, Tris(nonylphenyl)phosphit oder Diisodecylphenylphosphit, Scavenger, wie Si-N enthaltende Silazane oder Silylamide, Thixotropiermittel, wie beispielsweise Amidwachse, hydriertes Rizinusöl oder Polyglykole, und organische Lösungsmittel, wie Alkylaromaten, n-Methylpyrrolidon, Dipropylenglykoldimethylether, Glykolsäurebutylester, 2,2,4-Trimethylpentan-1,3-diol-monoisobutyrat, Diethylenglykol-n-butylether acetat oder Triethylphosphat.

Falls die erfindungsgemäßen Massen Additive (I) enthalten, handelt es sich um Mengen von vorzugsweise 0,01 bis 100 Gewichtsteilen, besonders bevorzugt 0,05 bis 30 Gewichtsteilen, insbesondere 0,1 bis 10 Gewichtsteilen, jeweils bezogen auf 100 Gewichtsteile Bestandteil (A). Die erfindungsgemäßen Massen enthalten bevorzugt Additive (I).

Besonders bevorzugt handelt es sich bei den erfindungsgemäßen Massen um solche herstellbar unter Verwendung von
(A) Verbindungen der Formel (I),
(B) organischen Basen der Formel (VIII) und/oder (IX) und/oder (X) und/oder (XI),
(C) organischen Säuren der Formel (III) und/oder (IV),
(D) Silanen der Formel (II),
   gegebenenfalls
(E) Vernetzer,
   gegebenenfalls
(F) Weichmacher,
   gegebenenfalls
(G) Füllstoffe,
   gegebenenfalls
(H) Haftvermittler,
(I) Additiven, ausgewählt aus der Gruppe bestehend aus Antioxidantien, UV-Absorber und sterisch gehinderte Amine.

Insbesondere enthalten die erfindungsgemäßen Massen außer den Komponenten (A) bis (I) keine weiteren Bestandteile.

Bei den erfindungsgemäßen Massen handelt es sich bevorzugt um zähflüssig bis pastöse Massen.

Zur Bereitung der erfindungsgemäßen Massen können alle Bestandteile in beliebiger Reihenfolge miteinander vermischt werden. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 35 bis 135°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Bevorzugt erfolgt das erfindungsgemäße Vermischen der einzelnen Bestandteile unter weitestgehendem Ausschluss von Wasser.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser-und Luftfahrzeugen, oder als Klebstoffe oder Verkittungsmassen, z.B. im Fensterbau oder bei der Herstellung von Vitrinen, sowie z.B. zur Herstellung von Schutzüberzügen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind.

Die erfindungsgemäßen kondensationsvernetzbaren Massen haben den Vorteil, dass sie keine oder nur äußerst geringe Mengen schwermetallhaltige Verbindungen enthalten und somit kennzeichnungsfrei und toxikologisch unbedenklich sind.

Des Weiteren haben die erfindungsgemäßen Massen den Vorteil, dass sie bei der Lagerung und im ausgehärteten Zustand nicht vergilben und somit auch hochwertige transparente Produkte hergestellt werden können.

Die erfindungsgemäßen vernetzbaren Massen haben den Vorteil, dass sie sich durch eine sehr hohe Lagerstabilität auszeichnen und das Rückstellvermögen in einem weiten Bereich einstellbar ist.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Test 1:

### Beurteilung des Rückstellvermögens

Zur Beurteilung des Rückstellvermögens werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Nach einem Tag wird das entstandene Fell von der PE-Folie entfernt und weitere 6 Tage frei hängend im Normklima (23°C und 50% relative Luftfeuchtigkeit) gelagert. Anschließend wird ein S2-Prüfkörper (siehe ISO 37) ausgestanzt und auf dem Steg ein 20 mm langer Abschnitt markiert. Nun wird dieser Abschnitt für 24 Stunden auf 40 mm gedehnt und anschließend eine Stunde im entspannten Zustand gelagert. Nach dieser Stunde wird die Länge der Markierung in mm gemessen und das Rückstellvermögen mittels Formel (Rückstellvermögen in % = (40 - gemessener Wert) / 20 x 100) errechnet. Der erhaltene Wert in % wird auf die nächstliegende ganze Zahl gerundet. Werte über 60 % werden als positiv betrachtet.

### Test 2:

### Bestimmung der Hautbildungszeit

Zur Bestimmung der Hautbildungszeit werden die in den Beispielen erhaltenen vernetzbaren Massen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Finger vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Test 3:

### Bestimmung des pH-Wertes

Zur Bestimmung des pH-Wertes werden die Bestandteile (B), (C) und (D) im eingesetzten Verhältnis gemischt eine Stunde stehengelassen und anschließend eine kleine Probe auf angefeuchtetes Universalindikatorpapier (z.B. Universalindikator der Fa. Merck, Deutschland mit einem Messbereich von pH 1-14) aufgetragen. Der pH-Wert wird nach 1 bis 3 min Einwirkzeit durch Vergleich mit der Farbscala bestimmt.

Im Folgenden soll Me für Methylgruppe stehen.

### Beispiel 1

444 g eines linearen Polypropylenglykols, welches an einem jeden Kettenende eine Gruppe der Formel (MeO)₂MeSi-CH₂-NH-C(=O)-aufweist, die jeweils an das -O- des Polypropylenglykolats angeknüpft ist mit einer Viskosität bei 25°C von ca. 30 000 mPa·s (käuflich erhältlich unter der Bezeichnung GENIOSIL® STP-E30 bei der Wacker Chemie AG, Deutschland), 300 g eines Polypropylenglykol-monohydroxy-monobutylethers mit einer Viskosität bei 50°C von 240 mPa·s und einem Wassergehalt, bestimmt mittels Titration nach Karl-Fischer, von 120 ppm und 24 g N-(trimethoxysilylmethyl)-O-methylcarbamat (käuflich erhältlich unter der Bezeichnung GENIOSIL^{®} XL 63 der Wacker Chemie AG, Deutschland) werden in einem Planetenmischer miteinander gemischt und 5 Minuten gerührt. Anschließend wird der Ansatz durch homogenes Einmischen von 75 g pyrogener hydrophober Kieselsäure mit einer spezifischen Oberfläche von 200 m²/g (käuflich erhältlich unter der Bezeichnung HDK^{®} H18 bei der Wacker Chemie AG, D-München), 6,0 g eines flüssigen Stabilisatorgemisches bestehend aus ca. 50% eines sterisch gehinderten Amins, hauptsächlich bestehend aus Bis(1,2,2,6,6-Pentamethyl-4-piperidyl)sebacat und Methyl-1,2,2,6,6-pentamethyl-4-piperidylsebacat, als Radikalfänger, ca. 35% eines UV-Absorbers vom Benzotriazoltyp, hauptsächlich bestehend aus 2-(2H-Benzotriazol-2-yl)4-methyl-6-dodecylphenol und ca. 15% eines sterisch gehinderten Phenols, hauptsächlich bestehend aus C7-C9-verzweigtes Alkyl-[3-(3,5-di-tert-butyl-4-hydroxyphenyl)]propionat als Oxidationsinhibitor (käuflich erhältlich unter der Bezeichnung Tinuvin® B 75 bei der Bodo Möller Chemie GmbH, Deutschland), 0,25 g Tetramethylguanidin (käuflich erhältlich bei der Fa. Sigma-Aldrich, Deutschland) und 2,0 g Octansäure (käuflich erhältlich bei der Fa. Sigma-Aldrich, Deutschland) vervollständigt. Zum Schluss wird die Mischung 5 Minuten bei ca. 100 mbar Absolutdruck gerührt, luftdicht abgefüllt und gelagert.

Nach einem Tag Lagerung bei Raumtemperatur werden Test 1 bis 3 durchgeführt. Die Ergebnisse finden sich in Tabelle 1.

### Vergleichsbeispiel 1

Die in Beispiel 1 beschriebene Verfahrensweise wurde wiederholt, mit der Abänderung, dass anstelle von 0,25 g Tetramethylguanidin 0,5 g Tetramethylguanidin eingesetzt wurden.
Nach einem Tag Lagerung bei Raumtemperatur werden Test 1 bis 3 durchgeführt. Die Ergebnisse finden sich in Tabelle 1.

### Vergleichsbeispiel 2

Die Vorgehensweise von Beispiel 1 wurde wiederholt, mit der Abänderung, dass anstelle von 0,25 g Tetramethylguanidin 0,75 g Tetramethylguanidin eingesetzt wurden.
Nach einem Tag Lagerung bei Raumtemperatur werden Test 1 bis 3 durchgeführt. Die Ergebnisse finden sich in Tabelle 1.

**Tabelle 1**

| **Beispiel** | **pH-Wert der Mischung aus den Komponenten (B), (C) und (D)** | **Hautbildungszeit (min)** | **Rückstellvermögen (%)** |
|---|---|---|---|
| **1** | **7** | **60** | **65** |
| **V1** | **8** | **30** | **28** |
| **V2** | **8,5** | **20** | **0** |

### Beispiel 2

444 g eines linearen Polypropylenglykols, welches an einem jeden Kettenende eine Gruppe der Formel (MeO)₂MeSi-CH₂-NH-C(=O)-aufweist, die jeweils an das -O- des Polypropylenglykolats angeknüpft ist mit einer Viskosität von ca. 30 000 mPa·s (käuflich erhältlich unter der Bezeichnung GENIOSIL® STP-E30 bei der Wacker Chemie AG, Deutschland), 150 g eines Polypropylenglykolmonohydroxy-monobutylethers mit einer Viskosität bei 50°C von 240 mPa·s und einem Wassergehalt, bestimmt mittels Titration nach Karl-Fischer, von 120 ppm, 24 g N-(trimethoxysilylmethyl)-O-methylcarbamat (käuflich erhältlich unter der Bezeichnung GENIOSIL^{®} XL 63 der Wacker Chemie AG, Deutschland) und 8 g einer Mischung aus 1 mol (3-Aminopropyl)trimethoxysilan (käuflich erhältlich unter der Bezeichnung GENIOSIL^{®} GF 96 der Wacker Chemie AG, Deutschland) und 2 mol (3-Glycidoxypropyl)trimethoxysilan (käuflich erhältlich unter der Bezeichnung GENIOSIL^{®} GF 80 der Wacker Chemie AG, Deutschland), welche mindestens vier Wochen bei Raumtemperatur gelagert wurde, werden in einem Planetenmischer miteinander gemischt und 5 Minuten gerührt. Anschließend werden 80 g pyrogene hydrophobe Kieselsäure mit einer spezifischen Oberfläche von 200 m²/g (käuflich erhältlich unter der Bezeichnung HDK^{®} H18 bei der Wacker Chemie AG, D-München) eingerührt und 5 min bei einem Absolutdruck von 100 mbar homogenisiert. Anschließend wird der Ansatz durch homogenes Einmischen von 6,0 g eines flüssigen Stabilisatorgemisches bestehend aus ca. 50% eines sterisch gehinderten Amins, hauptsächlich bestehend aus Bis(1,2,2,6,6-Pentamethyl-4-piperidyl)sebacat und Methyl-1,2,2,6,6-pentamethyl-4-piperidylsebacat, als Radikalfänger, ca. 35% eines UV-Absorbers vom Benzotriazoltyp, hauptsächlich bestehend aus 2-(2H-Benzotriazol-2-yl)4-methyl-6-dodecylphenol und ca. 15% eines sterisch gehinderten Phenols, hauptsächlich bestehend aus C7-C9-verzweigtes Alkyl-[3-(3,5-di-tert-butyl-4-hydroxyphenyl)]propionat als Oxidationsinhibitor (käuflich erhältlich unter der Bezeichnung Tinuvin® B 75 bei der Bodo Möller Chemie GmbH, Deutschland), 150 g eines Polypropylenglykolmonohydroxy-monobutylethers mit einer Viskosität bei 50°C von 240 mPa·s und einem Wassergehalt, bestimmt mittels Titration nach Karl-Fischer, von 120 ppm, 0,75 g einer im Vakuum von ca. 2 mbar Absolutdruck und bei maximal 80°C entwässerten Mischung aus 1 mol Tetrabutylphosphoniumhydroxid (käuflich erhältlich als 40%ige Lösung in Wasser bei der Fa. Sigma-Aldrich, Deutschland) und 1 mol Bis(2,4,4-Trimethylpentyl)phosphinsäure (käuflich erhältlich bei der Fa. Sigma-Aldrich, Deutschland) und 5,0 g Bis(2,4,4-Trimethylpentyl)phosphinsäure (käuflich erhältlich bei der Fa. Sigma-Aldrich, Deutschland) vervollständigt. Zum Schluss wird die Mischung 5 Minuten bei ca. 100 mbar Absolutdruck gerührt, luftdicht abgefüllt und gelagert. Nach einem Tag Lagerung bei Raumtemperatur werden Test 1 bis 3 durchgeführt. Die Ergebnisse finden sich in Tabelle 2.

### Vergleichsbeispiel 3

Die Vorgehensweise von Beispiel 2 wurde wiederholt, mit der Abänderung, dass zusätzlich noch 5,0 g (3-Aminopropyl)trimethoxysilan (käuflich erhältlich unter der Bezeichnung GENIOSIL^{®} GF 96 der Wacker Chemie AG, Deutschland) zusammen mit dem Stabilisator eingesetzt wurden.
Nach einem Tag Lagerung bei Raumtemperatur werden Test 1 bis 3 durchgeführt. Die Ergebnisse finden sich in Tabelle 2.

### Vergleichsbeispiel 4

Die Vorgehensweise von Beispiel 2 wurde wiederholt, mit der Abänderung, dass zusätzlich noch 10,0 g (3-Aminopropyl)trimethoxysilan (käuflich erhältlich unter der Bezeichnung GENIOSIL^{®} GF 96 der Wacker Chemie AG, Deutschland) zusammen mit dem Stabilisator eingesetzt wurden.
Nach einem Tag Lagerung bei Raumtemperatur werden Test 1 bis 3 durchgeführt. Die Ergebnisse finden sich in Tabelle 2.

**Tabelle 2**

| **Beispiel** | **pH-Wert der Mischung aus den Komponenten (B), (C) und (D)** | **Hautbildungszeit (min)** | **Rückstellvermögen (%)** |
|---|---|---|---|
| **2** | **5** | **20** | **75** |
| **V3** | **8** | **20** | **15** |
| **V4** | **8** | **15** | **0** |

## Patentansprüche

1. Vernetzbare Massen enthaltend
(A) Verbindungen der Formel
A-[CR¹₂-SiRₐ(OR²)₃₋ₐ]ₓ (I),
wobei
A einen x-wertigen, über Stickstoff, Phosphor, Sauerstoff, Schwefel öder Carbonylgruppe gebundenen organischen Rest bedeutet,
R gleich oder verschieden sein kann und einen einwertigen, gegebenenfalls substituierten Kohlenwasserstoffrest darstellt,
R¹ gleich oder verschieden sein kann und ein Wasserstoffatom oder einen einwertigen, gegebenenfalls substituierten Kohlenwasserstoffrest darstellt,
R² gleich oder verschieden sein kann und einen einwertigen, gegebenenfalls substituierten Kohlenwasserstoffrest darstellt,
x eine ganze Zahl von 1 bis 10 ist und
a 0, 1 oder 2 ist,
(B) Verbindung, welche mindestens ein basisches Element der 5. Hauptgruppe enthält, ausgewählt aus der Gruppe bestehend aus
(B1) basischen Stickstoff aufweisende Verbindung und
(B2) basischen Phosphor aufweisende Verbindung,
(C) Säure ausgewählt aus der Gruppe bestehend aus
(C1) phosphorhaltige Säure der Formel
O=PR²⁰_{q}(OH)ᵣ(OR²¹)_{3-q-r} (III)
und/oder deren Kondensate mit einer oder mehreren P-O-P-Bindungen und
(C2) Carbonsäuren der Formel
HOC(=O)R²² (IV),
wobei
R²⁰ gleich oder verschieden sein kann und gegebenenfalls substituierte Kohlenwasserstoffreste, die durch Sauerstoffatome unterbrochen sein können, bedeutet,
R²¹ gleich oder verschieden sein kann und Wasserstoffatom oder gegebenenfalls substituierte Kohlenwasserstoffreste, die durch Sauerstoffatome unterbrochen sein können, bedeutet,
R²² gleich oder verschieden sein kann und gegebenenfalls substituierte Kohlenwasserstoffreste, die durch Sauerstoffatome unterbrochen sein können, bedeutet,
q 1 und r 1 oder 2 ist oder
q 2 und r 1 ist;
sowie
(D) Silan der allgemeinen Formel
X-CR¹'₂-SiR'_{b}Y_{3-b} (II)
und/oder deren Teilhydrolysate, wobei
X einen einwertigen, über Stickstoff, Phosphor, Sauerstoff, Schwefel oder Carbonylgruppe gebundenen organischen Rest bedeutet,
R¹' gleich oder verschieden sein kann und eine für R¹ angegebene Bedeutung hat,
R' gleich oder verschieden sein kann und eine für R angegebene Bedeutung hat,
Y gleich oder verschieden sein kann und einen hydrolysierbaren Rest bedeutet und
b gleich 0, 1 oder 2 ist, mit der Mabgabe, dass die Mischung aus den Komponenten (B), (C) und (D) einen pH-Wert von kleiner oder gleich 7 aufweist.

2. Vernetzbare Massen gemäß Anspruch 1, **dadurch gekennzeichnet, dass** es sich bei Rest R¹ um Wasserstoffatom und Kohlenwasserstoffreste mit 1 bis 20 Kohlenstoffatomen handelt.

3. Vernetzbare Massen gemäß Anspruch 1 oder 2, **dadurch gekennzeichnet, dass** es sich bei Rest A um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisopren; Polyurethane; Polyester; Polyamide; Polyacrylate; Polymetacrylate; Vinylpolymer und Polycarbonate enthalten und die über -O-C(=O)-NH-, -NH-C(=O)O-, -NH-C(=O)-NH-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR"-, -P(=O)(OR")₂-, -O-CH₂-C(OH)H-CH₂-NR"-, -O-CH₂-C(OH)H-CH₂-S-, -O-CH₂-C(OH)H-CH₂-C(=O)-, -O-CH₂-C(OH)H-CH₂-O-, 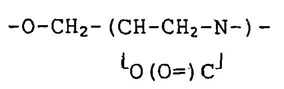 und 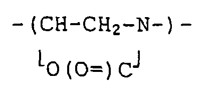 an die Gruppe -[CR¹₂-SiRₐ(OR²)₃₋ₐ] gebunden sind, wobei R" gleich oder verschieden sein kann und Wasserstoffatom oder eine für R angegebene Bedeutung hat.

4. Vernetzbare Massen gemäß einem oder mehreren der Ansprüche 1 bis 3, **dadurch gekennzeichnet, dass** die Verbindungen (A) der Formel (I) ein Molekulargewicht von 2 000 g/mol bis 100 000 g/mol aufweisen, jeweils angegeben als Zahlenmittel.

5. Vernetzbare Massen gemäß einem oder mehreren der Ansprüche 1 bis 4, **dadurch gekennzeichnet, dass** es sich bei Komponente (B1) um solche, ausgewählt aus der Gruppe bestehend aus Verbindungen (B11) der Formel
NR¹¹₃ (VIII),
wobei R¹¹ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, bedeutet,
mit der Maßgabe, dass in Formel (VIII) höchstens zwei R¹¹ die Bedeutung von Wasserstoffatom haben,
und
aliphatischen cyclischen Aminen,
Organosiliciumverbindungen (B12) mit mindestens einem basischen Stickstoff aufweisenden organischen Rest enthaltend Einheiten der Formel
R¹²ₖD₁Si(OR¹³)ₘO(_{4-k-1-m)/2} (IX),
worin
R¹² gleich oder verschieden sein kann und einen einwertigen, gegegebenenfalls substituierten SiC-gebundenen, von basischem Stickstoff freien organischen Rest bedeutet,
R¹³ gleich oder verschieden sein kann und Wasserstoffatom oder gegebenenfalls substituierte Kohlenwasserstoffreste bedeutet,
D gleich oder verschieden sein kann und einen einwertigen, Sigebundenen Rest mit basischem Stickstoff bedeutet,
k 0, 1, 2, oder 3,
l 0, 1, 2, 3 oder 4 und
m 0, 1, 2 oder 3 ist,
mit der Maßgabe, dass die Summe aus k+l+m kleiner oder gleich 4 ist und pro Molekül mindestens ein Rest D anwesend ist,
sowie
Verbindungen (B13) der Formel
(R¹⁴₂N)₂-C=NR¹⁵ (X)
wobei R¹⁴ gleich oder verschieden sein kann und Wasserstoffatom oder Kohlenwasserstoffreste, die gegebenenfalls mit Hydroxygruppen, Halogenatomen, Aminogruppen, Ethergruppen, Estergruppen, Epoxygruppen, Mercaptogruppen, Imingruppen, Imidgruppen oder (Poly)glykolresten substituiert sind, wobei letztere aus Oxyethylen- und/oder Oxypropyleneinheiten aufgebaut sind, bedeutet,
R¹⁵ Wasserstoffatom oder gegebenenfalls substituierte Kohlenwasserstoffreste bedeutet,
handelt.

6. Vernetzbare Massen gemäß einem oder mehreren der Ansprüche 1 bis 5, **dadurch gekennzeichnet, dass** es sich bei den basischen Phosphor aufweisenden Verbindungen (B2) um solche der Formel
[R¹⁶₄P⁺]ₛ Z^{s-} (XI),
wobei
s gleich 1, 2 oder 3 ist,
R¹⁶ gleich oder verschieden sein kann und gegebenenfalls substituierte Kohlenwasserstoffreste mit 1 bis 40 Kohlenstoffatomen bedeutet,
Z gleich eine Gruppe der Formel
O=PR¹⁷ₙ(O⁻)ₘ(OR¹⁸)₃₋ₙ₋ₘ (XII)
und/oder deren Kondensate mit einer oder mehreren P-O-P-Bindungen oder eine Gruppe der Formel
-OC(=O)R¹⁹ (XIII)
ist, wobei
R¹⁷ gleich oder verschieden sein kann und gegebenenfalls substituierte Kohlenwasserstoffreste, die durch Sauerstoffatome unterbrochen sein können, bedeutet,
R¹⁸ gleich oder verschieden sein kann und Wasserstoffatom oder gegebenenfalls substituierte Kohlenwasserstoffreste, die durch Sauerstoffatome unterbrochen sein können, bedeutet,
R¹⁹ gleich oder verschieden sein kann und gegebenenfalls substituierte Kohlenwasserstoffreste, die durch Sauerstoffatome unterbrochen sein können, bedeutet,
n 0, 1 oder 2 ist,
m 1, 2 oder 3 ist und
m+n 1, 2 oder 3 ist,
handelt.

7. Vernetzbare Massen gemäß einem oder mehreren der Ansprüche 1 bis 6, **dadurch gekennzeichnet, dass** es sich um solche handelt herstellbar unter Verwendung von
(A) Verbindungen der Formel (I),
(B) organische Basen der Formel (VIII) und/oder (IX) und/oder (X) und/oder (XI),
(C) organische Säuren der Formel (III) und/oder (IV),
(D) Silanen der Formel (II),
gegebenenfalls
(E) Vernetzer,
gegebenenfalls
(F) Weichmacher,
gegebenenfalls
(G) Füllstoffe,
gegebenenfalls
(H) Haftvermittler,
(I) Additive, ausgewählt aus der Gruppe bestehend aus Antioxidanten, UV-Absorber und sterisch gehinderte Amine.

8. Verfahren zur Herstellung der vernetzbaren Massen gemäß einem oder mehreren der Ansprüche 1 bis 7, **dadurch gekennzeichnet, dass** alle Bestandteile in beliebiger Reihenfolge miteinander vermischt werden.

9. Formkörper, hergestellt durch Vernetzung der vernetzbaren Massen gemäß einem oder mehreren der Ansprüche 1 bis 7.

## Claims

1. Crosslinkable materials comprising
(A) compounds of the formula
A-[CR¹₂-SiRₐ(OR²)₃₋ₐ]ₓ (I),
where
A is an x-valent organic radical bonded via nitrogen, phosphorus, oxygen, sulphur or a carbonyl group,
R may be the same or different and is a monovalent, optionally substituted hydrocarbon radical,
R¹ may be the same or different and is a hydrogen atom or a monovalent, optionally substituted hydrocarbon radical,
R² may be the same or different and is a monovalent, optionally substituted hydrocarbon radical,
x is an integer from 1 to 10 and
a is 0, 1 or 2,
(B) compound which contains at least one basic element of main group 5, selected from the group consisting of
(B1) compound comprising basic nitrogen and
(B2) compound comprising basic phosphorus,
(C) acid selected from the group consisting of
(C1) phosphorus acid of the formula
O=PR²⁰_{q}(OH)ᵣ(OR²¹)_{3-q-r} (III)
and/or condensates thereof with one or more P-O-P bonds and
(C2) carboxylic acids of the formula
HOC(=O)R²² (IV),
where
R²⁰ may be the same or different and is optionally substituted hydrocarbon radicals which may be interrupted by oxygen atoms,
R²¹ may be the same or different and is a hydrogen atom or optionally substituted hydrocarbon radicals which may be interrupted by oxygen atoms,
R²² may be the same or different and is optionally substituted hydrocarbon radicals which may be interrupted by oxygen atoms,
q is 1 and r is 1 or 2 or
q is 2 and r is 1,
and
(D) silane of the general formula
X-CR¹'₂-SiR'_{b}Y_{3-b} (II)
and/or partial hydrolyzates thereof, where
X is a monovalent organic radical bonded via nitrogen, phosphorus, oxygen, sulphur or a carbonyl group,
R¹' may be the same or different and is as defined for R¹,
R' may be the same or different and is as defined for R,
Y may be the same or different and is a hydrolyzable radical and
b is 0, 1 or 2, with the proviso that the mixture of components (B), (C) and (D) has a pH of less than or equal to 7.

2. Crosslinkable materials according to Claim 1, **characterized in that** the R¹ radical is a hydrogen atom or hydrocarbon radicals having from 1 to 20 carbon atoms.

3. Crosslinkable materials according to Claim 1 or 2, **characterized in that** the A radical represents organic polymer radicals which, as the polymer chain, contain polyoxyalkylenes such as polyoxyethylene, polyoxypropylene, polyoxybutylene, polyoxytetramethylene, polyoxyethylene-polyoxypropylene copolymer and polyoxypropylene-polyoxybutylene copolymer; hydrocarbon polymers such as polyisobutylene and copolymers of polyisobutylene with isoprene; polychloroprenes; polyisoprene; polyurethanes; polyesters; polyamides; polyacrylates; polymethacrylates; vinyl polymer and polycarbonates and are bonded via -O-C(=O)-NH-, -NH-C(=O)O-, -NH-C(=O)-NH-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR"-, -P(=O)(OR")₂-, -O-CH₂-C(OH)H-CH₂-NR"-, -O-CH₂-C(OH)H-CH₂-S-, -O-CH₂-C(OH)H-CH₂-C(=O)-, -O-CH₂-C(OH)H-CH₂-O-, 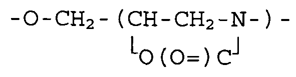 and 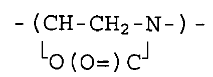 to the -[CR¹₂-SiRₐ(OR²)₃₋ₐ] group, where R" may be the same or different and is a hydrogen atom or is as defined for R.

4. Crosslinkable materials according to one or more of Claims 1 to 3, **characterized in that** the compounds (A) of the formula (I) have a molecular weight of from 2000 g/mol to 100 000 g/mol, in each case specified as the number average.

5. Crosslinkable materials according to one or more of Claims 1 to 4, **characterized in that** component (B1) comprises those selected from the group consisting of compounds (B11) of the formula
NR¹¹₃ (VIII)
where R¹¹ may be the same or different and is a hydrogen atom or hydrocarbon radicals which are optionally substituted by hydroxyl groups, halogen atoms, amino groups, ether groups, ester groups, epoxy groups, mercapto groups, cyano groups or (poly)glycol radicals, where the latter are formed from oxyethylene and/or oxypropylene units,
with the proviso that, in formula (VIII), at most two R¹¹ are defined as a hydrogen atom,
and
aliphatic cyclic amines,
organosilicon compounds (B12) having at least one organic radical comprising basic nitrogen, comprising units of the formula
R¹²ₖDₗSi(OR¹³)ₘO_{(4-k-l-m)/2} (IX)
in which
R¹² may be the same or different and is a monovalent, optionally substituted SiC-bonded organic radical free of basic nitrogen,
R¹³ may be the same or different and is a hydrogen atom or optionally substituted hydrocarbon radicals,
D may be the same or different and is a monovalent, Si-bonded radical with basic nitrogen,
k is 0, 1, 2 or 3,
1 is 0, 1, 2, 3 or 4 and
m is 0, 1, 2 or 3,
with the proviso that the sum of k+l+m is less than or equal to 4 and at least one D radical is present per molecule,
and
compounds (B13) of the formula
(R¹⁴₂N)₂-C=NR¹⁵ (X)
where R¹⁴ may be the same or different and is a hydrogen atom or hydrocarbon radicals which are optionally substituted by hydroxyl groups, halogen atoms, amino groups, ether groups, ester groups, epoxy groups, mercapto groups, imine groups, imide groups or (poly)-glycol radicals, where the latter are formed from oxyethylene and/or oxypropylene units,
R¹⁵ is a hydrogen atom or optionally substituted hydrocarbon radicals.

6. Crosslinkable materials according to one or more of Claims 1 to 5, **characterized in that** the compounds (B2) comprising basic phosphorus are those of the formula
[R¹⁶₄P⁺]ₛ Z^{s-} (XI)
where
s is 1, 2 or 3,
R¹⁶ may be the same or different and is optionally substituted hydrocarbon radicals having from 1 to 40 carbon atoms,
Z is a group of the formula
O=PR¹⁷ₙ(O⁻)ₘ(OR¹⁸)₃₋ₙ₋ₘ (XII)
and/or condensates thereof with one or more P-O-P bonds or a group of the formula
-OC(=O)R¹⁹ (XIII)
where
R¹⁷ may be the same or different and is optionally substituted hydrocarbon radicals which may be interrupted by oxygen atoms,
R¹⁸ may be the same or different and is a hydrogen atom or optionally substituted hydrocarbon radicals which may be interrupted by oxygen atoms,
R¹⁹ may be the same or different and is optionally substituted hydrocarbon radicals which may be interrupted by oxygen atoms,
n is 0, 1 or 2,
m is 1, 2 or 3 and
m+n is 1, 2 or 3.

7. Crosslinkable materials according to one or more of Claims 1 to 6, **characterized in that** they are those preparable using
(A) compounds of the formula (I),
(B) organic bases of the formula (VIII) and/or (IX) and/or (X) and/or (XI),
(C) organic acids of the formula (III) and/or (IV),
(D) silanes of the formula (II),
optionally
(E) crosslinkers,
optionally
(F) plasticizers,
optionally
(G) fillers,
optionally
(H) adhesion promoters,
(I) additives selected from the group consisting of antioxidants, UV absorbers and sterically hindered amines.

8. Process for preparing the crosslinkable materials according to one or more of Claims 1 to 7, **characterized in that** all constituents are mixed with one another in any sequence.

9. Moulding produced by crosslinking the crosslinkable materials according to one or more of Claims 1 to 7.

## Revendications

1. Matières réticulables, contenant
(A) des composés de formule
A-[CR¹₂-SiRₐ(OR²)₃₋ₐ]ₓ (I)
dans laquelle
A représente un radical organique x-valent lié par un atome d'azote, de phosphore, d'oxygène, de soufre ou par un groupe carbonyle,
R peut être le même ou différent et représente un radical hydrocarboné monovalent, éventuellement substitué,
R¹ peut être le même ou différent et représente un atome d'hydrogène ou un radical hydrocarboné monovalent, éventuellement substitué,
R² peut être le même ou différent et représente un radical hydrocarboné monovalent, éventuellement substitué,
x est un nombre entier allant de 1 à 10 et
a est 0, 1 ou 2,
(B) un composé qui contient au moins un élément basique du 5ème groupe principal, choisi dans l'ensemble constitué par
(B1) un composé comportant un atome d'azote basique et
(B2) un composé comportant un atome de phosphore basique,
(C) un acide choisi dans l'ensemble constitué par
(C1) un acide phosphoré de formule
O=PR²⁰_{q}(OH)ᵣ(OR²¹)_{3-q-r} (III)
et/ou ses produits de condensation à une ou plusieurs liaisons P-O-P et
(C2) des acides carboxyliques de formule
HOC(=O)R²² (IV)
où
R²⁰ peut être le même ou différent et représente des radicaux hydrocarbonés éventuellement substitués, qui peuvent être interrompus par des atomes d'oxygène,
R²¹ peut être le même ou différent et représente un atome d'hydrogène ou des radicaux hydrocarbonés éventuellement substitués, qui peuvent être interrompus par des atomes d'oxygène,
R²² peut être le même ou différent et représente des radicaux hydrocarbonés éventuellement substitués, qui peuvent être interrompus par des atomes d'oxygène,
q est 1 et r est 1 ou 2 ou
q est 2 et r est 1,
ainsi que
(D) un silane de formule générale
X-CR^{1'}₂-SiR'_{b}Y_{3-b} (II)
et/ou ses hydrolysats partiels,
X représentant un radical organique monovalent lié par un atome d'azote, de phosphore, d'oxygène, de soufre ou par un groupe carbonyle,
R^{1'} pouvant être le même ou différent et ayant une signification indiquée pour R¹,
R' pouvant être le même ou différent et ayant une signification indiquée pour R,
Y pouvant être le même ou différent et représentant un radical hydrolysable et
b étant égal à 0, 1 ou 2,
étant entendu que le mélange des composants (B), (C) et (D) a un pH inférieur ou égal à 7.

2. Matières réticulables selon la revendication 1, **caractérisées en ce que** pour le radical R¹ il s'agit d'un atome d'hydrogène et de radicaux hydrocarbonés ayant de 1 à 20 atomes de carbone.

3. Matières réticulables selon la revendication 1 ou 2, **caractérisées en ce que** pour le radical A il s'agit de radicaux polymères organiques qui contiennent en tant que chaîne polymère des polyoxyalkylènes, tels que le polyoxyéthylène, le polyoxypropylène, le polyoxybutylène, le polyoxytétraméthylène, un copolymère polyoxyéthylène-polyoxypropylène et un copolymère polyoxypropylène-polyoxybutylène ; des polymères d'hydrocarbures, tels que le polyisobutylène et des copolymères de polyisobutylène avec l'isoprène ; les polychloroprènes ; le polyisoprène ; les polyuréthannes ; les polyesters ; les polyamides ; les polyacrylates ; les polyméthacrylates ; un polymère vinylique et les polycarbonates et qui sont liés au groupe - [CR¹₂-SiRₐ(OR²)₃₋ₐ] par -O-C(=O)-NH-, -NH-C(=O)O-, - NH-C(=O)-NH-, -NH-C(=O)-, -C(=O)-NH-, -C(=O)-O-, - O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, - O-, -NR"-, -P(=O) (OR")₂-, -O-CH₂-C(OH)H-CH₂-NR"-, - O-CH₂-C(OH)H-CH₂-S-, -O-CH₂-C(OH)H-CH₂-C(=O)-, -O-CH₂-C(OH)H-CH₂-O-, 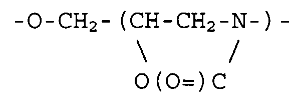 et 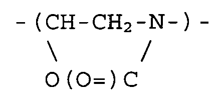 R" pouvant être le même ou différent et représentant un atome d'hydrogène ou ayant une signification indiquée pour R.

4. Matières réticulables selon une ou plusieurs des revendications 1 à 3, **caractérisées en ce que** les composés (A) de formule (I) ont une masse moléculaire de 2 000 g/mole à 100 000 g/mole, chaque fois indiquée en tant que moyenne.

5. Matières réticulables selon une ou plusieurs des revendications 1 à 4, **caractérisées en ce que** pour le composant (B1) il s'agit d'un tel composant choisi dans l'ensemble constitué par des composés (B11) de formule
NR¹¹₃ (VIII)
dans laquelle R¹¹ peut être le même ou différent et représente un atome d'hydrogène ou des radicaux hydrocarbonés qui sont éventuellement substitués par des groupes hydroxy, des atomes d'halogène, des groupes amino, des groupes éther, des groupes ester, des groupes époxy, des groupes mercapto, des groupes cyano ou des radicaux (poly)glycol, ces derniers étant constitués de motifs oxyéthylène et/ou oxypropylène,
étant entendu que dans la formule (VIII) au maximum deux symboles R¹¹ ont la signification d'un atome d'hydrogène,
et
des amines aliphatiques cycliques,
des composés organosiliciés (B12) comportant des motifs contenant au moins un radical organique comportant un atome d'azote basique, de formule
R¹²ₖDₗSi(OR¹³)ₘO_{(4-k-l-m)/2} (IX)
dans laquelle
R¹² peut être le même ou différent et représente un radical organique monovalent, éventuellement substitué, lié par une liaison SiC, exempt d'azote basique,
R¹³ peut être le même ou différent et représente un atome d'organique ou des radicaux hydrocarbonés éventuellement substitués,
D peut être le même ou différent et représente un radical monovalent lié à Si, à azote basique,
k est 0, 1, 2 ou 3,
l est 0, 1, 2, 3 ou 4 et
m est 0, 1, 2 ou 3,
étant entendu que la somme de k+l+m est égale ou inférieure à 4 et au moins un radical D est présent par molécule,
ainsi que
des composés (B13) de formule
(R¹⁴₂N)₂-C=NR¹⁵ (X)
dans laquelle R¹⁴ peut être le même ou différent et représente un atome d'hydrogène ou des radicaux hydrocarbonés qui sont éventuellement substitués par des groupes hydroxy, des atomes d'halogène, des groupes amino, des groupes éther, des groupes ester, des groupes époxy, des groupes mercapto, des groupes imino, des groupes imido ou des radicaux (poly)glycol, ces derniers étant constitués à base de motifs oxyéthylène et/ou oxypropylène,
R¹⁵ représente un atome d'hydrogène ou des radicaux hydrocarbonés éventuellement substitués.

6. Matières réticulables selon une ou plusieurs des revendications 1 à 5, **caractérisées en ce que** pour les composés (B2) comportant un atome de phosphore basique, il s'agit de ceux de formule
[R¹⁶₄P⁺]ₛ Z^{s-} (XI)
dans laquelle
s est égal à 1, 2 ou 3,
R¹⁶ peut être le même ou différent et représente des radicaux hydrocarbonés éventuellement substitués, ayant de 1 à 40 atomes de carbone,
Z représente un groupe de formule
O=PR¹⁷ₙ(O⁻)ₘ(OR¹⁸)₃₋ₙ₋ₘ (XII)
et/ou de leurs produits de condensation à une ou plusieurs liaisons P-O-P
ou un groupe de formule
⁻OC(=O)R¹⁹ (XIII)
où
R¹⁷ peut être le même ou différent et représente des radicaux hydrocarbonés éventuellement substitués, qui peuvent être interrompus par des atomes d'oxygène,
R¹⁸ peut être le même ou différent et représente un atome d'hydrogène ou des radicaux hydrocarbonés éventuellement substitués, qui peuvent être interrompus par des atomes d'oxygène,
R¹⁹ peut être le même ou différent et représente des radicaux hydrocarbonés éventuellement substitués, qui peuvent être interrompus par des atomes d'oxygène,
n est 0, 1 ou 2, m est 1, 2 ou 3 et
m+n est 1, 2 ou 3.

7. Matières réticulables selon une ou plusieurs des revendications 1 à 6, **caractérisées en ce qu'**il s'agit de celles qui peuvent être préparées avec utilisation
(A) de composés de formule (I),
(B) de bases organiques de formule (VIII) et/ou de formule (IX) et/ou de formule (X) et/ou de formule (XI),
(C) d'acides organiques de formule (III) et/ou de formule (IV),
(D) de silanes de formule (II),
éventuellement
(E) d'agents de réticulation,
éventuellement
(F) de plastifiants,
éventuellement
(G) de charges,
éventuellement
(H) de promoteurs d'adhérence,
(I) d'additifs, choisis dans le groupe constitué par les antioxydants, les absorbeurs UV et les amines à empêchement stérique.

8. Procédé pour la préparation des matières réticulables selon une ou plusieurs des revendications 1 à 7, **caractérisé en ce qu'**on mélange tous les composants entre eux, en un ordre quelconque.

9. Corps moulé, produit par réticulation des matières réticulables selon une ou plusieurs des revendications 1 à 7.
